# EUROPEAN PATENT APPLICATION

(11) **EP 1 488 923 A1**
(43) Date of publication of application: **22.12.2004**
(21) Application number: 03743562.5
(22) Date of filing: 03.03.2003
(51) Int. Cl.: B32B 27/30, B32B 27/40

(54) **DECORATIVE SHEET AND PROCESS FOR PRODUCING THE SAME**

(30) Priority: 01.03.2002 JP 2002056540; 29.03.2002 JP 2002095557
(71) Applicant: C. I. Kasei Company, Limited, Tokyo 104-8321 (JP); Kishimoto, Takaharu, Tondabayashi-shi, Osaka 584-0071 (JP); Kawabata, Shigeo, Osaka-shi, Osaka 544-0013 (JP)
(72) Inventor: KAWABATA, Shigeo, Osaka-shi, Osaka 544-0013 (JP); MASUDA, Yoshikatsu, C.I. Kasei Company, Limited, Chuo-ku, Tokyo 104-8321 (JP)
(74) Representative: Vuillermoz, Bruno
(86) International application number: PCT/JP2003/002440
(87) International publication number: WO 2003/074273

(57) **Abstract**

A decorative sheet with excellent designability, abrasion resistance, weather resistance, and solvent resistance, which is easy to apply and displays low levels of adhesive transferability is provided. A decorative sheet (50) comprises a pressure sensitive adhesive layer (52), a first primer layer (53) that contacts this layer (52), a decorative layer (54) that contacts this layer (53), a second primer layer (55) that contacts this layer (54), and a radiation cured coating layer (56) that contacts this layer (55), wherein the first primer layer (53) comprises at least 25% by weight of at least one thermoplastic resin selected from a group consisting of vinyl chloride-vinyl acetate copolymer resins, acrylic based resins and urethane based resins.

## Description

### TECHNICAL FIELD

The present invention relates to decorative sheets that can be used for construction members such as the external walls of buildings and the front doors of houses, exterior and interior coverings for automobiles, exterior and interior coverings for vehicles and ships, and billboards and signs, as well as a production process for such sheets.

### BACKGROUND ART

In order to improve the design of construction members such as the external walls of buildings and the front doors of houses, exterior and interior coverings for automobiles, exterior and interior coverings for vehicles and ships, and billboards and signs and the like, a decorative sheet which has undergone decorative treatment to add coloring or the like is often bonded to the surface of the material.

In those cases where weather resistance is required, conventional decorative sheets often use acrylic based resin films that have been decorated on the rear surface. Alternatively, fluororesin laminated sheets comprising layers of fluororesin can also be used.

However, decorative sheets that use an acrylic based resin film as the surface layer display poor surface hardness, with a pencil hardness of 2B to 4B, and consequently do not provide adequate abrasion resistance. As a result, the surface is prone to scratching, either during production or during use, which causes a deterioration in the decorative design, meaning the sheets are unable to satisfactorily perform their function as decorative sheets.

Furthermore, acrylic based resin films also suffer from problems of poor solvent resistance to solvents such as thinner and ketones, and poor chemical resistance to alkali materials. In addition, the films also undergo whitening in hot water.

Furthermore, decorative sheets that use fluororesins suffer from problems of high cost, due to the cost of the fluororesin. Furthermore, fluororesins with good soiling resistance suffer from problems of poor ink adhesion, and because there are restrictions on the inks or paints that can be used, free decoration of the sheets is impossible, meaning the level of decorative design cannot be improved to a satisfactory level.

Furthermore, in order to improve the operating efficiency of decorative sheets, ease of application is a much sought after property. In addition, if the surface of a decorative sheet that has been applied using a pressure sensitive adhesive or an adhesive is scratched, then the decorative sheet may need to be removed and replaced with a new decorative sheet. However, when the old decorative sheet is removed, the adhesive often transfers and remains stuck to the underlying surface to which the decorative sheet was bonded. Consequently, this old transferred adhesive must be removed before the new decorative sheet is applied, meaning the operating efficiency associated with applying a new sheet is poor.

Japanese Unexamined Patent Application, First Publication No. 2001-1483 discloses a decorative sheet comprising a printed layer that contacts a release sheet, and a coating film layer formed by curing a heat curing or radiation curing resin paint that contacts the printed layer. This decorative sheet is bonded to a substrate using either a pressure sensitive adhesive or an adhesive, and consequently suffers from the problems described above.

In the present description, the property wherein a pressure sensitive adhesive applied to a decorative sheet transfers and bonds to the surface to which the decorative sheet is attached is termed "adhesive transferability"

### DISCLOSURE OF INVENTION

The present invention takes the above factors into consideration, with an object of providing a decorative sheet with excellent designability, abrasion resistance, weather resistance, solvent resistance and chemical resistance, which is easy to apply, and displays low levels of adhesive transferability. Furthermore, another object is to provide a production process for a decorative sheet, which enables a decorative sheet with the above characteristics to be produced efficiently, and with a high level of quality.

The present invention comprises the following aspects.
[1] A decorative sheet comprising a pressure sensitive adhesive layer, a radiation cured coating layer, and one or more primer layers disposed therebetween and contacting one of the two layers, wherein
   in those cases where one of the primer layers contacts the pressure sensitive adhesive layer, that primer layer comprises at least 25% by weight of at least one thermoplastic resin selected from a group consisting of vinyl chloride-vinyl acetate copolymer resins, acrylic based resins and urethane based resins, and
   in those cases where one of the primer layers contacts the radiation cured coating layer, that primer layer comprises at least 25% by weight of at least one thermoplastic resin selected from a group consisting of acrylic based resins and urethane based resins, and/or a cured product of a radiation curable resin formed from an acrylic based oligomer.
[2] A decorative sheet according to aspect [1], wherein a decorative layer with a printed pattern formed from a colored ink comprising a binder component containing at least 25% by weight of at least one thermoplastic resin selected from a group consisting of vinyl chloride-vinyl acetate copolymer resins, acrylic based resins and urethane based resins, and a coloring component, is disposed between the pressure sensitive adhesive layer and the radiation cured coating layer.
[3] A decorative sheet according to aspect [1], wherein
   the one or more primer layers comprise a first primer layer and a second primer layer disposed in that order on the side of the pressure sensitive adhesive layer,
   the first primer layer comprises at least 25% by weight of at least one thermoplastic resin selected from a group consisting of vinyl chloride-vinyl acetate copolymer resins, acrylic based resins and urethane based resins, and
   the second primer layer comprises at least 25% by weight of at least one thermoplastic resin selected from a group consisting of acrylic based resins and urethane based resins, and/or a cured product of a radiation curable resin formed from an acrylic based oligomer.
[4] A decorative sheet according to aspect [3], wherein a decorative layer with a printed pattern formed from a colored ink comprising a binder component containing at least 25% by weight of at least one thermoplastic resin selected from a group consisting of vinyl chloride-vinyl acetate copolymer resins, acrylic based resins and urethane based resins, and a coloring component is disposed between the first primer layer and the second primer layer.
[5] A decorative sheet according to aspect [3], wherein a decorative layer with a printed pattern formed from a colored ink comprising a binder component containing at least 25% by weight of at least one thermoplastic resin selected from a group consisting of vinyl chloride-vinyl acetate copolymer resins, acrylic based resins and urethane based resins, and a coloring component is disposed between the pressure sensitive adhesive layer and the first primer layer.
[6] A decorative sheet comprising a decorative layer, a radiation cured coating layer, and one or more primer layers disposed therebetween and contacting one of the two layers, wherein
   the decorative layer incorporates a printed pattern formed from a colored ink comprising a binder component containing at least 25% by weight of at least one thermoplastic resin selected from a group consisting of vinyl chloride-vinyl acetate copolymer resins, acrylic based resins and urethane based resins, and a coloring component,
   in those cases where one of the primer layers contacts the decorative layer, that primer layer comprises at least 25% by weight of at least one thermoplastic resin selected from a group consisting of vinyl chloride-vinyl acetate copolymer resins, acrylic based resins and urethane based resins, and
   in those cases where one of the primer layers contacts the radiation cured coating layer, that primer layer comprises at least 25% by weight of at least one thermoplastic resin selected from a group consisting of acrylic based resins and urethane based resins, and/or a cured product of a radiation curable resin formed from an acrylic based oligomer.
[7] A production process for a decorative sheet comprising:
   a primer layer formation step for forming one or more primer layers on a releasable film,
   a step for forming a radiation curable coating layer on top of the one or more primer layers,
   a curing step for irradiating at least the radiation curable coating layer with ultraviolet radiation or an electron beam, thus curing the radiation curable coating layer, and
   a pressure sensitive adhesive layer formation step for removing the releasable film from the one or more primer layers, and forming a pressure sensitive adhesive on top of the primer layer.
[8] A production process for a decorative sheet according to aspect [1], wherein the one or more primer layers include one layer containing at least 25% by weight of at least one thermoplastic resin selected from a group consisting of acrylic based resins and urethane based resins, and/or a cured product of a radiation curable resin formed from an acrylic based oligomer.
[9] A production process for a decorative sheet according to aspect [7], wherein the one or more primer layers contact either one of the pressure sensitive adhesive layer and the radiation curable coating layer,
   in those cases where one of the primer layers contacts the pressure sensitive adhesive layer, that primer layer comprises at least 25% by weight of at least one thermoplastic resin selected from a group consisting of vinyl chloride-vinyl acetate copolymer resins, acrylic based resins and urethane based resins, and
   in those cases where one of the primer layers contacts the radiation curable coating layer, that primer layer comprises at least 25% by weight of at least one thermoplastic resin selected from a group consisting of acrylic based resins and urethane based resins, and/or a cured product of a radiation curable resin formed from an acrylic based oligomer.
[10] A production process for a decorative sheet according to any one of aspect [7] through aspect [9], further comprising, prior to the primer layer formation step, a decorative layer formation step for forming a decorative layer of a printed pattern on top of the releasable film, using a colored ink comprising a binder component containing at least 25% by weight of at least one thermoplastic resin selected from a group consisting of vinyl chloride-vinyl acetate copolymer resins, acrylic based resins and urethane based resins, and a coloring component, wherein the primer layer is then formed on top of the decorative layer.
[11] A production process for a decorative sheet according to any one of aspect [7] through aspect [9], wherein the primer layer formation step comprises:
   a first primer layer formation step for forming a first primer layer by applying a first primer material comprising at least 25% by weight of at least one thermoplastic resin selected from a group consisting of vinyl chloride-vinyl acetate copolymer resins, acrylic based resins and urethane based resins to the releasable film, and subsequently drying the first primer material, and
   a second primer layer formation step for forming a second primer layer by applying a second primer material comprising at least 25% by weight of at least one thermoplastic resin selected from a group consisting of acrylic based resins and urethane based resins, and/or a cured product of a radiation curable resin formed from an acrylic based oligomer to the first primer layer, and subsequently drying the second primer material.
[12] A production process for a decorative sheet according to aspect [11], further comprising, between the first primer layer formation step and the second primer layer formation step, a decorative layer formation step for forming a decorative layer of a printed pattern on top of the first primer layer, using a colored ink comprising a binder component containing at least 25% by weight of at least one thermoplastic resin selected from a group consisting of vinyl chloride-vinyl acetate copolymer resins, acrylic based resins and urethane based resins, and a coloring component.
[13] A production process for a decorative sheet according to aspect [11], further comprising, prior to the first primer layer formation step, a decorative layer formation step for forming a decorative layer of a printed pattern on top of the releasable film, using a colored ink comprising a binder component containing at least 25% by weight of at least one thermoplastic resin selected from a group consisting of vinyl chloride-vinyl acetate copolymer resins, acrylic based resins and urethane based resins, and a coloring component.

### BRIEF DESCRIPTION OF THE DRAWINGS

FIG. 1 is a cross sectional view showing a decorative sheet according to a first embodiment of the present invention.
FIG. 2 is a cross sectional view showing an example of the decorative sheet according to the first embodiment of the present invention, in which the radiation cured coating layer comprises two layers.
FIG. 3A through FIG. 3E shows a series of cross sectional views showing the step sequence in a production process for a decorative sheet according to the first embodiment of the present invention.
FIG. 4A through FIG. 4D shows a series of cross sectional views showing the step sequence in a production process for a decorative sheet according to a second embodiment of the present invention.
FIG. 5 is a schematic illustration showing the winding of a sheet comprising a primer material applied to a releasable film.
FIG. 6 is a cross sectional view showing a decorative sheet according to a second embodiment of the present invention.
FIG. 7A through FIG. 7F shows a series of cross sectional views showing the step sequence in a production process for a decorative sheet according to the second embodiment of the present invention.
FIG. 8A through FIG. 8C shows a series of cross sectional views showing the step sequence in a production process for a decorative sheet according to the second embodiment of the present invention.
FIG. 9 is a cross sectional view showing a decorative sheet according to a third embodiment of the present invention.
FIG. 10A through FIG. 10F shows a series of cross sectional views showing the step sequence in a production process for a decorative sheet according to the third embodiment of the present invention.
FIG. 11A through FIG. 11 C shows a series of cross sectional views showing the step sequence in a production process for a decorative sheet according to the third embodiment of the present invention.
FIG. 12 is a cross sectional view showing one example of a decorative sheet according to a fourth embodiment of the present invention.
FIG. 13 is a cross sectional view showing another example of a decorative sheet according to the fourth embodiment of the present invention.
FIG. 14A through FIG. 14H shows a series of cross sectional views showing the step sequence in one example of the production process for a decorative sheet according to the fourth embodiment of the present invention.
FIG. 15 is a cross sectional view showing one example of a decorative sheet according to a fifth embodiment of the present invention.
FIG. 16 is a cross sectional view showing another example of a decorative sheet according to the fifth embodiment of the present invention.
FIG. 17A through FIG. 17I shows a series of cross sectional views showing the step sequence in one example of the production process for a decorative sheet according to the fifth embodiment of the present invention.
FIG. 18 is a schematic illustration showing the winding of a sheet comprising a primer material applied to a releasable film.

### BEST MODE FOR CARRYING OUT THE INVENTION

### (First Embodiment)

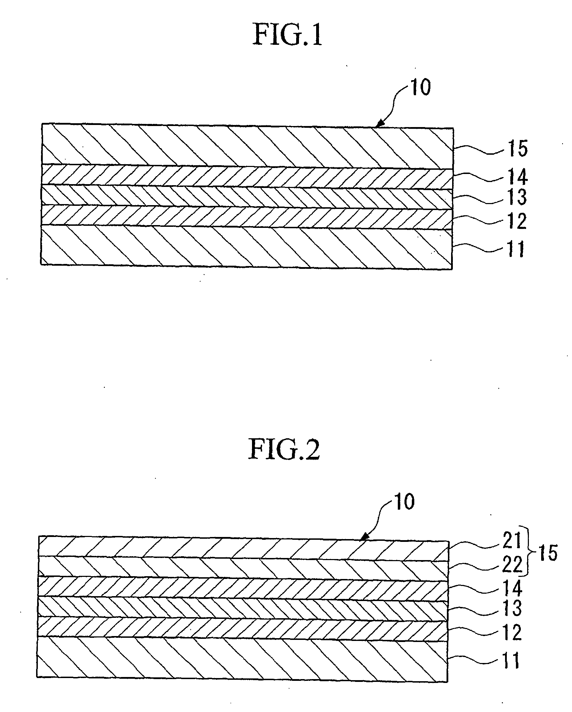

A decorative sheet according to a first embodiment of the present invention is described with reference to FIG. 1. A decorative sheet 10 comprises a release sheet 11, a pressure sensitive adhesive layer 12, a decorative layer 13 that contacts the pressure sensitive adhesive layer 12, a primer layer 14 that contacts the decorative layer 13, and a radiation cured coating layer 15 that contacts the primer layer 14.

There are no particular restrictions on the release sheet 11, provided it does not bond with the pressure sensitive adhesive, and suitable examples include sheets formed from polyethylene terephthalate, polyethylene or polypropylene, as well as paper coated with a release agent such as silicone.

From the viewpoints of ease of handling and cost, the thickness of the release sheet 11 is preferably within a range from 25 to 50 µm.

There are no particular restrictions on the pressure sensitive adhesive layer 12, provided it bonds to the decorative layer 13, and is formed from a pressure sensitive adhesive with excellent weather resistance. Suitable examples of this type of pressure sensitive adhesive include acrylic based adhesives comprising an acrylic polymer and a tackifier. Suitable examples of the monomer units within such acrylic based adhesives include alkyl (meth)acrylates such as methyl (meth)acrylate, ethyl (meth)acrylate, n-propyl (meth)acrylate and butyl (meth)acrylate. The term (meth)acrylate means either acrylate or methacrylate. Examples of suitable tackifiers include rosin based tackifiers, terpene based tackifiers, phenol based tackifiers and coumarone based tackifiers.

The thickness of the pressure sensitive adhesive layer 12 is preferably within a range from 30 to 100 µm, and even more preferably from 35 to 80 µm. If the thickness of the pressure sensitive adhesive layer 12 is less than 30 µm, then there is a danger of the adhesive strength being inadequate when the decorative sheet 10 is bonded to a substrate, whereas if the thickness exceeds 100 µm, the layer becomes thicker than is necessary, which simply increases the cost.

The decorative layer 13 comprises a printed pattern formed from a colored ink comprising a binder component containing at least 25% by weight, and preferably at least 50% by weight, of a thermoplastic resin comprising at least one of a vinyl chloride-vinyl acetate copolymer resin, an acrylic based resin and a urethane based resin, and a coloring component, and has been decorated to improve the design. The decorative design may also comprise multi-colored printing of patterns and pictures.

There are no particular restrictions on the vinyl chloride-vinyl acetate copolymer resins that can be used as the binder component, although in terms of ensuring suitability as an ink, the vinyl chloride / vinyl acetate weight ratio within the copolymer resin is preferably within a range from 92/8 to 75/25, and the weight average molecular weight is preferably within a range from 25,000 to 40,000. Furthermore, amongst acrylic based resins, acrylic polyol based acrylic based resins are most suitable as inks, and are consequently preferred.

In this manner, if the binder component of the decorative layer 13 contains at least 25% by weight of a thermoplastic resin comprising at least one of a vinyl chloride-vinyl acetate copolymer resin, an acrylic based resin, and a urethane based resin, then the adhesion of the decorative layer 13 to the pressure sensitive adhesive layer 12 can be improved, and the adhesive transferability can be lowered. In the binder component of the colored ink, the thermoplastic resin containing at least one of a vinyl chloride-vinyl acetate copolymer resin, an acrylic based resin, and a urethane based resin may also account for 100% by weight of the component.

Furthermore, other possible binder components include thermoplastic resins such as urethane resins, and the types of acrylic based oligomers used in the primer layer 14.

Examples of suitable coloring components that can be incorporated within the decorative layer 13 include black carbon based pigments such as RAVEN 420 (manufactured by Columbian Chemicals Company), carbon black FW200 (manufactured by Degussa AG), MONARCH 1000 (manufactured by Cabot Corporation), and carbon black 2400B (manufactured by Mitsubishi Chemical Corporation), blue and green based pigments such as HELIOGEN BLUE L-6900 and HELIOGEN GREEN L-8605 (both manufactured by BASF Corporation), PALOMAR BLUE B-4806 (manufactured by Bayer AG), FASTOGEN BLUE 5030F and FASTOGEN GREEN S (manufactured by Dainippon Ink and Chemicals, Inc.), white based pigments such as titanium oxide, as well as other colored pigments.

In addition, other high brightness pigments can also be added to increase the level of decorative design. Examples of such high brightness pigments include aluminum based metallic pigments such as aluminum paste 8820YF and aluminum paste 7130N (manufactured by Toyo Aluminum Co., Ltd.), and SAP210N and SAPFM4000 (manufactured by Showa Aluminum Powder Co., Ltd.), as well as pearl pigments such as IRIODIN 101, IRIODIN 205 and IRIODIN 321 (all manufactured by Merck Co., Ltd.), and EXTERIOR MEARLIN BRIGHT WHITE 1389X, EXTERIOR MEARLIN SUPER GOLD 239Z and EXTERIOR MEARLIN SUPER BRONZE 259 X (all manufactured by The Mearl Corp.).

The coloring components described above can be used singularly, or in combinations of two or more different components. By providing a decorative layer 13 comprising this type of coloring component, the level of decorative design of the decorative sheet 10 can be improved.

The primer layer 14 comprises at least 25% by weight, and preferably from 30 to 95% by weight, of at least one material selected from cured products of a radiation curable resin comprising an acrylic based oligomer such as a urethane acrylate oligomer, an ester acrylate oligomer, an epoxy acrylate oligomer or an acrylic resin acrylate, as well as acrylic based resins such as acrylic polyols, and urethane based resins. By ensuring that the primer layer 14 contains at least 25% by weight of at least one material selected from acrylic oligomer cured products, acrylic based resins and urethane based resins, the adhesion with the radiation cured coating layer 15 can be improved. The resin component of the primer material may contain up to 75% by weight of a thermoplastic resin comprising at least one of a vinyl chloride-vinyl acetate copolymer resin and a urethane based resin. By incorporating up to 75% by weight of a thermoplastic resin comprising at least one of a vinyl chloride-vinyl acetate copolymer resin and a urethane based resin within the resin component of the primer material, the adhesion with the decorative layer 13 can be further improved. The primer layer may contain 100% by weight of a cured product of a radiation curable resin comprising an acrylic based oligomer, may contain 100% by weight of an acrylic based resin such as an acrylic polyol, or may contain 100% by weight of a urethane based resin.

Of the acrylic based oligomers described above, urethane acrylate oligomers and acrylic resin acrylate oligomers are preferred. In those cases in which a urethane acrylate oligomer is used in both the primer layer 14 and the radiation cured coating layer 15, the weight average molecular weight of the urethane acrylate oligomer contained within the primer layer 14 is preferably approximately equal to the weight average molecular weight of the urethane acrylate oligomer used in the radiation cured coating layer 15. This type of urethane acrylate oligomer displays favorable properties in terms of viscosity adjustment by addition of a solvent, and dispersibility with thermoplastic resins, which improves the ease with which a coating of the primer material can be formed.

Acrylic resin acrylates are produced by first copolymerizing an acrylic copolymer resin comprising a polymethyl methacrylate as the primary component, with a (meth)acrylate monomer containing a functional group such as a carboxyl group, an epoxy group or a hydroxyl group, and then performing an addition reaction with an acrylate monomer with a functional group capable of undergoing an addition reaction with the above functional groups, thereby introducing double bonds into the resin. Cured products of these types of acrylic resin acrylates display excellent weather resistance and solvent resistance, in a similar manner to cured products of urethane acrylate oligomers.

Specific examples of the acrylic based oligomers used in the primer layer 14 include "CSEB5 MEDIUM" (a urethane acrylate oligomer) and "CSEB12 MEDIUM" (an acrylic resin acrylate based oligomer), manufactured by Showa Ink Manufacturing Co., Ltd. Furthermore, a specific example of an acrylic polyol based acrylic based resin is "MKA MEDIUM", also manufactured by Showa Ink Manufacturing Co., Ltd.

Furthermore, the primer layer 14 may also contain a small quantity of cured products of oligomers other than acrylic based oligomers. Examples of possible oligomers other than acrylic based oligomers include allyl ether based oligomers, allyl urethane based oligomers, and vinyl ether based oligomers.

Furthermore, the primer layer 14 may contain up to 75% by weight of a thermoplastic resin comprising at least one of a vinyl chloride-vinyl acetate copolymer resin and a urethane based resin. By incorporating a vinyl chloride-vinyl acetate copolymer resin or a urethane based resin within the primer layer, the adhesion with the first primer layer can be further improved.

Examples of the above urethane based resins include the acrylic urethane resins obtained by reacting an acrylic polyol and a diisocyanate, which are particularly suited to use within inks. Furthermore, acrylic urethane resins obtained using a different polyol from an acrylic polyol such as a polycarbonate diol, a polyol diether or a polyurethane polyol can also be used, and acrylic urethane resins obtained using a combination of two or more different polyols are also suitable.

The radiation cured coating layer 15 comprises a cured product of a radiation curable material that has been cured by irradiation. Examples of suitable radiation curable materials include materials comprising a radiation curable resin formed from an acrylic based oligomer such as a urethane acrylate oligomer, an ester acrylate oligomer, an epoxy acrylate oligomer or an acrylic resin acrylate, together with a polymerizable monomer such as hexyl acrylate, 2-ethylhexyl acrylate, isobornyl acrylate, isooctyl acrylate, 1,6-hexanediol diacrylate and neopentyl glycol diacrylate. Furthermore, in those cases where the radiation cured coating layer 15 is cured by ultraviolet irradiation, the layer also comprises a photoinitiator.

The acrylic based oligomer is preferably a urethane acrylate oligomer formed from a high molecular weight isocyanate and an acrylate containing a hydroxyl group, and the weight average molecular weight is typically from 400 to 7000. Urethane acrylate oligomers with a weight average molecular weight within a range from 400 to 7000 display excellent levels of weather resistance and flexibility.

Examples of the high molecular weight isocyanate used in forming the urethane acrylate oligomer include aromatic isocyanates such as tolylene diisocyanate and xylylene diisocyanate, and aliphatic isocyanates such as hexamethylene diisocyanate, isophorone diisocyanate, and hydrogenated xylylene diisocyanate. Furthermore, examples of suitable acrylates containing a hydroxyl group include 2-hydroxyethyl acrylate, 2-hydroxypropyl acrylate, and pentaerythritol acrylate.

From the viewpoints of achieving excellent levels of weather resistance, flexibility and adhesion, the urethane acrylate oligomer is preferably an aliphatic urethane acrylate oligomer formed from an aliphatic isocyanate and an acrylate containing a hydroxyl group. Specific examples of solventless radiation curable coating materials comprising an aliphatic urethane acrylate oligomer and a polymerizable monomer include KRM7818, KRM7842 and KRM7946, all manufactured by Daicel UCB Co., Ltd. Furthermore, the urethane acrylate oligomer is preferably trifunctional or lower.

The radiation cured coating layer 15 preferably also comprises a benzotriazole based ultraviolet absorber and a hindered amine based photostabilizer. Including a benzotriazole based ultraviolet absorber and a hindered amine based photostabilizer improves the weather resistance even further. Incorporating either one of a benzotriazole based ultraviolet absorber and a hindered amine based photostabilizer is also possible, although adding both the benzotriazole based ultraviolet absorber and the hindered amine based photostabilizer provides a synergistic effect, resulting in a greater improvement in the weather resistance.

A benzotriazole based ultraviolet absorber and a hindered amine based photostabilizer can also be incorporated within layers other than the radiation cured coating layer 15.

Specific examples of suitable benzotriazole based ultraviolet absorbers include TINUVIN P (2-(2'-hydroxy-5'-methylphenyl)benzotriazole) TINUVIN 234 and TINUVIN 400 (all manufactured by Ciba Specialty Chemicals Inc.), and Sumisorb 300 (manufactured by Sumitomo Chemical Co., Ltd.). Furthermore, specific examples of suitable hindered amine based photostabilizers include TINUVIN 292 and 622LD (both manufactured by Ciba Specialty Chemicals Inc.), and Sanol LS770 and 765 (both manufactured by Sankyo Chemical Industries Ltd.)

The benzotriazole based ultraviolet absorber and the hindered amine based photostabilizer are each preferably added in a quantity equivalent to 0.1 to 5.0 parts by weight, and even more preferably from 0.5 to 3.0 parts by weight, and most preferably from 0.8 to 2.0 parts by weight, per 100 parts by weight of the radiation curable coating material. If these quantities are less than 0.1 parts by weight, then an improvement in weather resistance may not be achievable, whereas if the quantities exceed 5.0 parts by weight, then the size of the effect no longer reflects the quantity added, and the only result is an increase in cost.

In addition, other additives such as different ultraviolet absorbers, different photostabilizers, antioxidants, age resistors, leveling agents, antistatic agents, storage stability agents, plasticizers, lubricants, inorganic based fillers, organic based fillers, and fine particles of metal (composite) oxides such as titanium oxide, zinc oxide and ITO, which combine an ultraviolet absorption function and a near infrared absorption function.

Furthermore, colored pigments can also be incorporated within the radiation cured coating layer 15. Specific examples of colored pigments that can be incorporated within the radiation cured coating layer 15 include black carbon based pigments such as RAVEN 420 (manufactured by Columbian Chemicals Company), carbon black FW200 (manufactured by Degussa AG), MONARCH 1000 (manufactured by Cabot Corporation), and carbon black 2400B (manufactured by Mitsubishi Chemical Corporation), blue and green based pigments such as HELIOGEN BLUE L-6900 and HELIOGEN GREEN L-8605 (both manufactured by BASF Corporation), PALOMAR BLUE B-4806 (manufactured by Bayer AG), FASTOGEN BLUE 5030F and FASTOGEN GREEN S (both manufactured by Dainippon Ink and Chemicals, Inc.), white based pigments such as titanium oxide, as well as other colored pigments.

In addition, other high brightness pigments can also be added to increase the level of decorative design. Examples of such high brightness pigments include aluminum based metallic pigments such as aluminum paste 8820YF and aluminum paste 7130N (both manufactured by Toyo Aluminum Co., Ltd.), and SAP210N and SAPFM4000 (both manufactured by Showa Aluminum Powder Co., Ltd.), as well as pearl pigments such as IRIODIN 101, IRIODIN 205 and IRIODIN 321 (all manufactured by Merck Co., Ltd.), and EXTERIOR MEARLIN BRIGHT WHITE 1389X, EXTERIOR MEARLIN SUPER GOLD 239Z and Exterior MEARLIN SUPER BRONZE 259 X (all manufactured by The Mearl Corp.).

The pigment components described above can be used singularly, or in combinations of two or more different components. By adding this type of colored pigment to the radiation curable coating layer 15, the layer can be either colored freely or kept transparent, thus enabling the level of decorative design to be improved.

The thickness of the radiation cured coating layer 15 is preferably within a range from 10 to 500 µm, and even more preferably from 20 to 300 µm. If the thickness of the radiation cured coating layer 15 is less than 10 µm, then the decorative design is not manifested adequately, and use as a decorative sheet becomes problematic, whereas if the thickness exceeds 500 µm, then the flexibility of the decorative sheet deteriorates, causing a deterioration in the handling properties.

In a decorative sheet of the first embodiment described above, in those cases where the decorative layer 13 is viewed from the side of the radiation cured coating layer 15, a coloring component may be included not only in the decorative layer 13, but also in the primer layer 14 and/or the radiation curable coating layer 15. In such cases, the coloring component used can employ the same coloring component used within the decorative layer 13. If such a coloring component is added not only to the decorative layer 13, but also to the primer layer 14 and/or the radiation curable coating layer 15, then the depth of the decorative design is increased, further improving the design of the produced decorative sheet 10.

As shown in FIG. 2, the radiation cured coating layer 15 can also be constructed from a plurality of layers (in the figure, the radiation cured coating layer 15 comprises an upper layer 21 and a lower layer 22). In this type of case, a different coloring component can be added to each of the plurality of layers. By forming the radiation curable coating layer 15 from a plurality of layers, and adding a different coloring component to each of the plurality of layers, the decorative design can be improved even further.

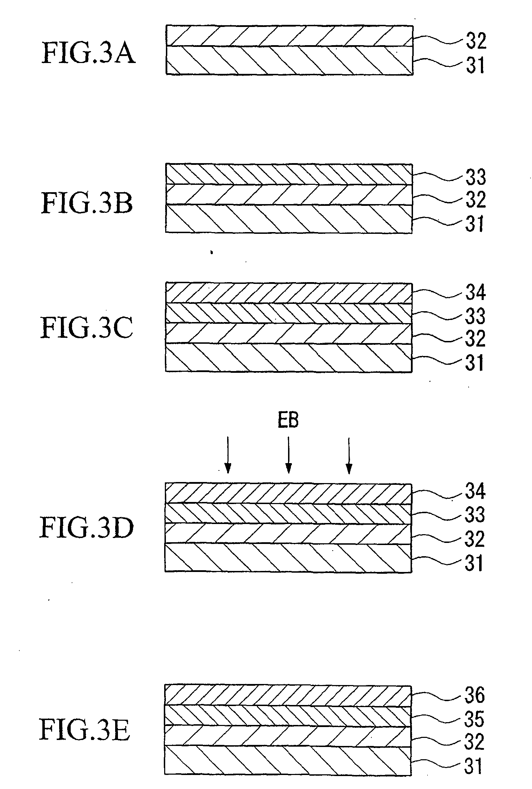

Next is a description of a production process for producing a decorative sheet of the first embodiment, with reference to FIG. 3 through FIG. 5.

In this production process, first, in a decorative layer formation step shown in FIG. 3A, a printed pattern is formed on the surface of a releasable film 31 using a colored ink comprising a binder component containing at least 25% by weight of a thermoplastic resin containing at least one of a vinyl chloride-vinyl acetate copolymer resin, an acrylic based resin and a urethane based resin, and a coloring component, thus forming a decorative layer 32. The releasable film 31 is a film with a surface to which the colored ink and the primer material will not adhere, and is formed from a similar material to the release sheet 11, such as a sheet of polyethylene terephthalate, polyethylene or polypropylene, or a sheet of paper coated with a release agent such as silicone. Furthermore, the application of the colored ink can be conducted using a method such as gravure printing, screen printing or ink-jet printing. In the binder component of the colored ink, the thermoplastic resin containing at least one of a vinyl chloride-vinyl acetate copolymer resin, an acrylic based resin and a urethane based resins may account for 100% by weight of the resin component.

Subsequently, in a primer coating formation step shown in FIG. 3B, a primer material, comprising within the resin component, at least 25% by weight of at least one resin selected from a group consisting of radiation curable resins formed from acrylic based oligomers, acrylic based resins and urethane based resins, is applied to the surface of the decorative layer 32 and subsequently dried to form a primer coating 33.

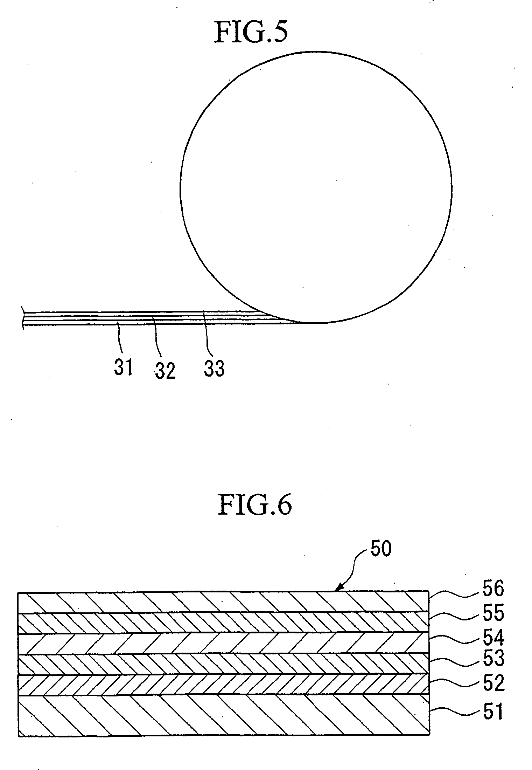

The process may then proceed, as is, to the next step, although if required, the sheet comprising the decorative layer 32 and the primer coating 33 formed on the releasable film 31 may also be wound as shown in FIG. 5, and then transported to the location used for conducting the next step. In such cases, the composition of the primer coating 33 is preferably selected so that the primer coating 33 does not adhere to the releasable film 31.

Subsequently, in a radiation curable coating material application step shown in FIG. 3C, a radiation curable coating material 34 is applied to the surface of the formed primer coating 33.

Next, in a curing step shown in FIG. 3D, an electron beam (EB) is irradiated onto at least the radiation curable coating material 34, under conditions including a nitrogen gas atmosphere (with a residual oxygen concentration of 100 ppm), an absorbed dose of 7 Mrad, and a passage speed of 50 m/min. In those cases where the primer material incorporates an acrylic based oligomer, when the electron beam (EB) is irradiated onto the oligomer component of the primer coating 33, and the oligomer component and polymerizable monomer contained within the radiation curable coating material 34, radicals are generated within the unsaturated groups of the acrylates, and these radicals cause a polymerization of the acrylates, resulting in curing. As a result, the primer coating 33 undergoes curing to form a primer layer 35, while the radiation curable coating material 34 also undergoes curing, forming a radiation cured coating layer 36. In those cases where the primer material incorporates no radiation curable resins such as acrylic based oligomers, but rather incorporates only acrylic based resins, the electron beam irradiation causes only curing of the radiation curable coating material.

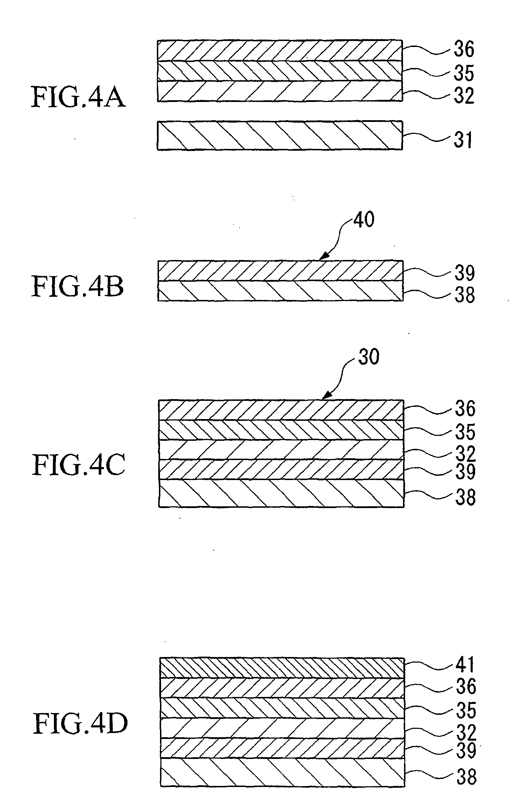

Subsequently, in a pressure sensitive adhesive layer formation step shown in FIG. 4A, the releasable film 31 is removed from the decorative layer 32. On the other hand, in a separate pressure sensitive adhesive sheet formation step shown in FIG. 4B, a pressure sensitive adhesive is applied to the surface of a release sheet 38 to form a pressure sensitive adhesive layer 39, thus forming a pressure sensitive adhesive sheet 40. Then, as shown in FIG. 4C, the pressure sensitive adhesive sheet 40 is bonded to the decorative layer 32 via the surface of the pressure sensitive adhesive layer 39, and the resulting construction is cured for 2 days at 40 to 50°C, thus yielding a decorative sheet 30.

In addition, as shown in FIG. 4D, a protective film 41 comprising a polyolefin film or a polyethylene terephthalate film or the like, may also be formed on top of the radiation cured coating layer 36 of the product decorative sheet 30. Providing a protective film 41 prevents the decorative sheet from becoming scratched prior to use.

In the production process described above, a polymerizable monomer may be added to the radiation curable coating material 34 to enable better control of the viscosity and the hardness. This type of polymerizable monomer undergoes curing together with the radiation curable resin such as the acrylic based oligomer, when the material is irradiated with an electron beam or ultraviolet radiation.

Suitable examples of this polymerizable monomer include hexyl acrylate, 2-ethylhexyl acrylate, isobornyl acrylate, decyl acrylate, lauryl acrylate, stearyl acrylate, ethoxyethoxy-ethyl acrylate, lauryl vinyl ether, 2-ethylhexyl vinyl ether, N-vinylformamide, isodecyl acrylate, isooctyl acrylate, vinyl-caprolactam, N-vinylpyrrolidone, 1,6-hexanediol diacrylate and neopentyl glycol diacrylate. Of these, isobornyl acrylate is particularly preferred as it offers excellent weather resistance.

In the production process described above, there are no particular restrictions on the method used for applying the primer material and the radiation curable coating material, and suitable application methods include bar coating, roll coating, air doctor coating, blade coating, squeeze coating, air knife coating, reverse roll coating, gravure coating, transfer coating, fountain coating and die coating. Of these methods, applying the primer material using a gravure coating method is preferred. By applying the primer material by gravure coating, the applied material can be formed as a uniform, thin film, and a fine undulating texture can be formed on the surface of the material. As a result, the primer material can undergo favorable physical adhesion to the radiation curable coating material 34, and the adhesive transferability of the decorative sheet 30 can be further lowered. During application of the primer material by gravure coating, a gravure plate roll from 80 mesh to 150 mesh is preferably used, and the quantity of material applied is preferably within a range from 2 to 6 g/m².

Furthermore, application of the radiation curable coating material 34 is preferably conducted using a die coating method. By applying the radiation curable coating material 34 by die coating, entrapment of bubbles and impurities can be minimized, thus reducing surface defects and producing a superior external appearance. Furthermore, die coating also enables an improvement in the precision of the thickness of the applied layer, by enabling the thickness error to be reduced to no more than 3%.

In the production process of the decorative sheet 30 described above, a photoinitiator can also be added to the primer material and the radiation curable coating material 34 containing the acrylic based oligomer, and the primer material and the radiation curable coating material 34 can then be cured by irradiation with ultraviolet light. When the primer material and the radiation curable coating material 34 containing an added photoinitiator are irradiated with ultraviolet light, the ultraviolet radiation causes the photoinitiator to generate radicals, and these radicals cause a polymerization of the acrylates, resulting in curing. Suitable conditions for the ultraviolet irradiation include a nitrogen atmosphere (with a residual oxygen concentration of 100 ppm), irradiation with two 120 W/cm long wavelength, high pressure mercury lamps, and a passage speed of 30 m/minute.

There are no particular restrictions on the photoinitiator, provided it is capable of generating radicals on irradiation with ultraviolet radiation, and suitable examples include benzyl dimethyl ketal, benzophenone, 1-hydroxycyclohexyl phenyl ketone, 2,4,6-trimethylbenzoyl diphenylphosphine oxide, ethyl-2,4,6-trimethylbenzoyl diphenylphosphinate, bis-(2,6-dimethoxybenzoyl)-2,4,4-trimethylpentylphosphine oxide, 2-methyl-1-[4-(methylthio)phenyl]-2-morpholinopropan-1-one, and 2-benzyl-2-dimethylamino-1-(4-morpholinophenyl)-butan-1-one. Examples of commercially available products containing these compounds include IRGACURE 184, 651, 500, 907, 369, 784, 819 and 2959 (all manufactured by Ciba Specialty Chemicals Inc.), LUCIRIN TPO and LR8893 (both manufactured by BASF Corporation), DAROCUR 1116 and 1173 (both manufactured by Merck Co., Ltd.), UBECRYL P36 (manufactured by UCB Co., Ltd.), and ESCACURE KIP150 and ESCACURE KIP100F (both manufactured by Lamberti Spa).

These photoinitiators can be used singularly, or in mixtures of two or more different compounds. In those cases where two or more photoinitiators are mixed together, a combination of 1-hydroxycyclohexyl phenyl ketone and 2-methyl-1-[4-(methylthio)phenyl]-2-morpholinopropan-1-one, or a combination of bis(2,4,6-trimethylbenzoyl)phenylphosphine oxide and 2-methyl-1-[4-(methylthio)phenyl]-2-morpholinopropan-1-one is preferred.

The quantity added of this type of photoinitiator is preferably within a range from 2 to 5 parts by weight. If the quantity of the photoinitiator is less than 2 parts by weight, then no improvement in curing speed results, and there is a danger that the acrylic based oligomer or the radiation curable coating may not undergo adequate curing, whereas if the quantity exceeds 5 parts by weight, the quantity is greater than required, which simply causes an increase in cost.

In addition, the efficiency of the radical generation caused by the irradiation can be improved by the addition of a photoinitiating assistant, which may be added together with the photoinitiator.

In the decorative sheet 10 of the first embodiment described above, because the radiation cured coating layer 15 is formed from a solventless coating material containing a cured product of an acrylic based oligomer and a polymerizable monomer, the decorative sheet 10 displays excellent levels of weather resistance, solvent resistance and chemical resistance. Furthermore, because the oligomer and low molecular weight components are cross-linked, internal strain is low, meaning the dimensional stability of the decorative sheet 10 is also excellent.

Furthermore, the decorative sheet 10 comprises a decorative layer 13, and because a decorative design with depth can be formed, and high brightness hue is possible, the decorative sheet 10 also provides an excellent level of decorative designability.

Furthermore, because the decorative sheet 10 comprises no plasticizers, bleed out does not occur, and soiling resistance is high.

Furthermore, in the production process of a decorative sheet 30 according to the first embodiment, the decorative layer 32 was formed using a colored ink comprising a binder component containing a thermoplastic resin containing at least one of a vinyl chloride-vinyl acetate copolymer resin, an acrylic based resin and a urethane based resin, and because this decorative layer 32 and the pressure sensitive adhesive layer 39 are bonded together, the adhesion between the decorative layer 32 and the pressure sensitive adhesive layer 39 can be improved. In addition, a primer layer 35 is also formed, and this primer layer 35 is used to bond the decorative layer 32 and the radiation cured coating layer 36 together, thus enabling the adhesion between the decorative layer 32 and the radiation cured coating layer 36 to also be improved. As a result, the adhesive transferability of the decorative sheet 30 can be lowered considerably.

Furthermore, in the curing step, an applied solventless radiation curable coating material 34 is irradiated with either an electron beam (EB) or ultraviolet radiation, thus forming the radiation cured coating layer 36. As a result, the production of the decorative sheet is highly efficient. Furthermore, because the quantity of solvent required can be reduced, the costs associated with ensuring a safe working environment can be reduced. Furthermore, because the majority of the decorative sheet is formed from the radiation curable coating material, distortion within the product decorative sheet 30 is minimal, the dimensional stability is excellent, and the shrinkage factor can be reduced.

Furthermore, in the pressure sensitive adhesive layer formation step, the releasable film 31 is removed from the decorative layer 32, and if this decorative layer 32 is bonded to the pressure sensitive adhesive layer 39 of the pressure sensitive adhesive sheet 40 obtained in the pressure sensitive adhesive sheet formation step, then not only is the process simple, but the surface is protected from scratching, meaning the above decorative sheet 30 can be formed easily and with a high level of quality.

### (Second Embodiment)

As follows is a description of a decorative sheet according to a second embodiment of the present invention, with reference to FIG. 6. This decorative sheet 50 comprises a release sheet 51, a pressure sensitive adhesive layer 52 that contacts the release sheet 51, a first primer layer 53 that contacts the pressure sensitive adhesive layer 52, a decorative layer 54 that contacts the first primer layer 53, a second primer layer 55 that contacts the decorative layer 54, and a radiation cured coating layer 56 that contacts the second primer layer 55.

In this embodiment, the release sheet 51, the pressure sensitive adhesive layer 52, the decorative layer 54, the second primer layer 55, and the radiation cured coating layer 56 are identical with the release sheet 11, the pressure sensitive adhesive layer 12, the decorative layer 13, the primer layer 14, and the radiation cured coating layer 15 respectively of the first embodiment, and consequently description of these components is omitted.

The first primer layer 53 comprises at least 25% by weight of a thermoplastic resin containing at least one of a vinyl chloride-vinyl acetate copolymer resin, an acrylic based resin such as an acrylic polyol resin, and a urethane based resin. By incorporating at least 25% by weight of a thermoplastic resin containing at least one of a vinyl chloride-vinyl acetate copolymer resin, an acrylic based resin and a urethane based resin within the first primer layer 53, the adhesion to the pressure sensitive adhesive can be improved, enabling a reduction in the adhesive transferability. In the first primer layer 53, the thermoplastic resin containing at least one of a vinyl chloride-vinyl acetate copolymer resin, an acrylic based resin and a urethane based resin may also account for 100% by weight of the layer.

There are no particular restrictions on the vinyl chloride-vinyl acetate copolymers that can be used, although in terms of ensuring suitability as an ink, the vinyl chloride / vinyl acetate weight ratio within the copolymer resin is preferably within a range from 92/8 to 75/25, and the weight average molecular weight is preferably within a range from 25,000 to 40,000. Furthermore, amongst acrylic based resins, acrylic polyol based acrylic based resins are most suitable as inks, and are consequently preferred.

Because the description of acrylic based resins and urethane based resins presented in relation to the primer layer of the first embodiment also applies to this embodiment, any further description of these resins is omitted here.

In addition, the first primer layer 53 may also comprise up to 75% by weight of a cured product of a radiation curable resin formed from an acrylic based oligomer. By incorporating an acrylic based oligomer in the first primer layer 53, the weather resistance, solvent resistance and chemical resistance can be further improved.

The first primer layer 53 may also comprise a coloring component. In those cases where a coloring component is incorporated within the first primer layer 53, the layer is typically of a single solid color. By incorporating a coloring component within the first primer layer 53, the combination with the decorative layer 54 enables a further improvement in the level of decorative design.

In those cases where the first primer layer 53 is of a solid color, the thickness of the layer is preferably within a range from 0.5 to 10 µm, and even more preferably from 1 to 5 µm. If the thickness of the first primer layer 53 is less than 0.5 µm, then there is a danger that the effect of the solid coloring may be inadequate, and a danger that the adhesive strength between the decorative layer 54 and the pressure sensitive adhesive layer 52 may also be unsatisfactory, whereas if the thickness exceeds 10 µm, then the layer becomes thicker than is necessary, which simply increases the cost.

In those cases where the first primer layer 53 does not contain a coloring component, the thickness of the layer is preferably within a range from 0.3 to 2.0 µm. If the thickness of the first primer layer 53 is less than 0.3 µm, then there is a danger that the adhesive strength between the decorative layer 54 and the pressure sensitive adhesive layer 52 may be unsatisfactory, whereas if the thickness exceeds 2.0 µm, then the layer becomes thicker than is necessary, which simply increases the cost.

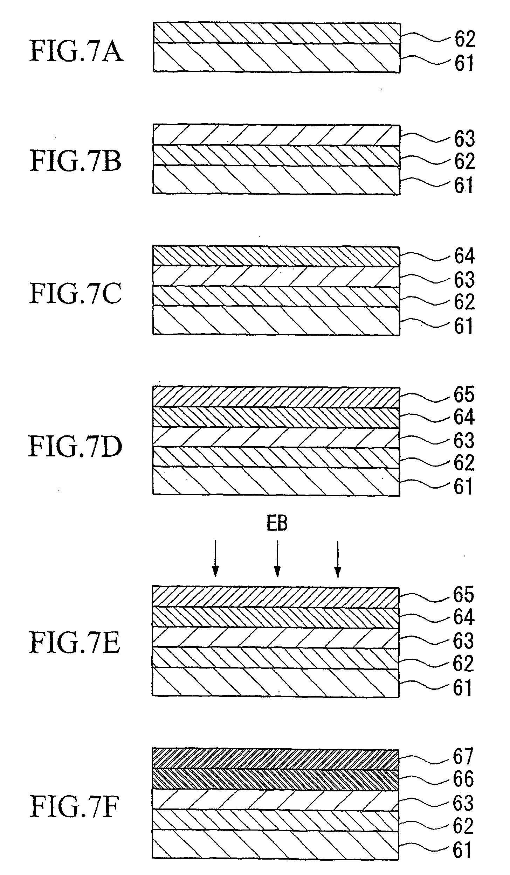

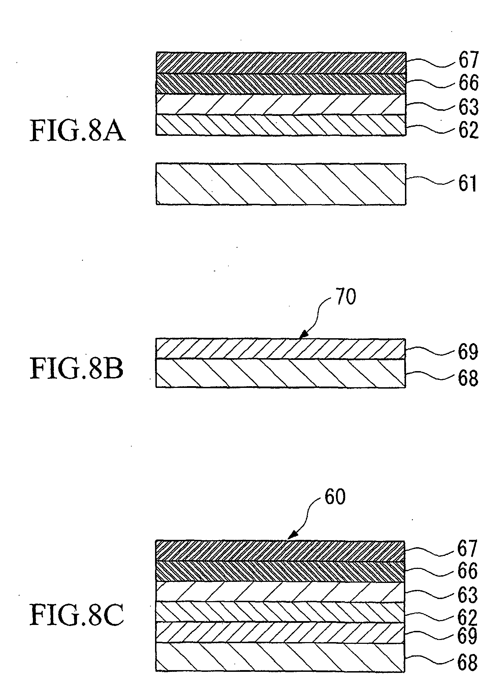

Next is a description of a production process for producing a decorative sheet of the second embodiment, with reference to FIG. 7 and FIG. 8.

In this production process, first, in a first primer layer formation step shown in FIG. 7A, a first primer material comprising at least 25% by weight of a thermoplastic resin component containing at least one of a vinyl chloride-vinyl acetate copolymer resin, an acrylic based resin such as an acrylic polyol resin, and a urethane based resin is applied to the surface of a releasable film 61, and subsequently dried using a dryer or the like, thus forming a first primer layer 62. In the first primer material, the thermoplastic resin containing at least one of a vinyl chloride-vinyl acetate copolymer resin, an acrylic based resin and a urethane based resin may account for 100% by weight of the primer material.

Next, in a decorative layer formation step shown in FIG. 7B, a printed pattern is formed on the surface of the first primer layer 62 using a colored ink comprising a binder component containing at least 25% by weight of a thermoplastic resin component containing at least one of a vinyl chloride-vinyl acetate copolymer resin, an acrylic based resin, and a urethane based resin, and a coloring component, thus forming a decorative layer 63. In the decorative layer 63, the presence of the first primer layer 62 enables the precision of the printed pattern to be improved. In the binder component of the colored ink, the thermoplastic resin containing at least one of a vinyl chloride-vinyl acetate copolymer resin, an acrylic based resin and a urethane based resin may account for 100% by weight of the component. The decorative layer 63 may be partially printed wherein the layer is provided with a printed pattern.

Subsequently, in a second primer coating formation step shown in FIG. 7C, a second primer material comprising a resin component containing at least 25% by weight of at least one of a radiation curable resin formed from an acrylic based oligomer, an acrylic based resin and a urethane based resin is applied to the surface of the decorative layer 63, and is then dried to form a second primer coating 64. In the second primer material, the radiation curable resin formed from an acrylic based oligomer or the acrylic based resin may account for 100% by weight of the primer material.

At this point, the sheet that has been generated in the previous steps may be wound, and then transported to the location used for conducting the next step. In such cases, the composition of the second primer coating 64 is preferably selected so that the second primer coating 64 does not adhere to the releasable film 61.

Next, in a curable coating application step shown in FIG. 7D, a solventless radiation curable coating material 65 is applied to the surface of the second primer coating 64.

Subsequently, in a curing step shown in FIG. 7E, an electron beam (EB) is irradiated onto the second primer coating 64 containing the acrylic based oligomer, and the radiation curable coating material 65, under conditions including a nitrogen gas atmosphere (with a residual oxygen concentration of 100 ppm), an absorbed dose of 7 Mrad, and a passage speed of 50 m/min. As a result, as shown in FIG. 7F, the second primer coating 64 undergoes curing to form a second primer layer 66, while the radiation curable coating material 65 also undergoes curing, forming a radiation cured coating layer 67.

Subsequently, in a pressure sensitive adhesive layer formation step shown in FIG. 8A, the releasable film 61 is removed from the first primer layer 62. On the other hand, in a separate pressure sensitive adhesive sheet formation step shown in FIG. 8B, a pressure sensitive adhesive is applied to the surface of a release sheet 68 to form a pressure sensitive adhesive layer 69, thus forming a pressure sensitive adhesive sheet 70. Then, as shown in FIG. 8C, the pressure sensitive adhesive sheet 70 is bonded to the first primer layer 62 via the surface of the pressure sensitive adhesive layer 69, and the resulting construction is cured for 2 days at 40 to 50°C, thus yielding a decorative sheet 60.

In the production process described above, the resin component of the first primer material may contain up to 75% by weight of a radiation curable resin formed from an acrylic based oligomer. By incorporating up to 75% by weight of a radiation curable resin formed from an acrylic based oligomer within the resin component of the first primer material, the first primer material can also be cured during irradiation of at least the radiation curable coating material, meaning the production efficiency can be improved.

Furthermore, as was the case with the first embodiment, in the second embodiment, a photoinitiator can be added to the second primer material and the radiation curable coating material, enabling these materials to be cured by irradiation with ultraviolet light. Furthermore, a protective film may also be formed on top of the radiation cured coating layer of the product decorative sheet.

In the second embodiment described above, the level of decorative design can be further improved by coloring the first primer layer. Accordingly, a decorative sheet of this embodiment is particularly suited to applications which require a high level of decorative design.

### (Third Embodiment)

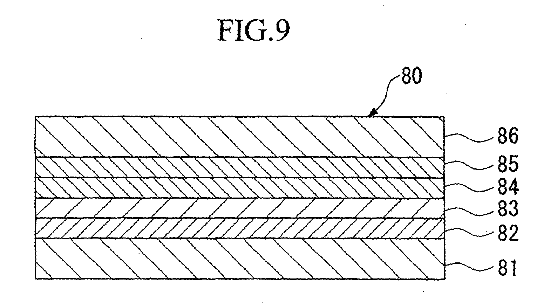

As follows is a description of a decorative sheet according to a third embodiment of the present invention, with reference to FIG. 9. This decorative sheet 80 comprises a release sheet 81, a pressure sensitive adhesive layer 82 that contacts the release sheet 81, a decorative layer 83 that contacts the pressure sensitive adhesive layer 82, a first primer layer 84 that contacts the decorative layer 83, a second primer layer 85 that contacts the first primer layer 84, and a radiation cured coating layer 86 that contacts the second primer layer 85. That is to say, this embodiment is the same as the second embodiment, except that the positions of the first primer layer and the decorative layer are interchanged.

In this embodiment, the release sheet 81, the pressure sensitive adhesive layer 82, the decorative layer 83, the first primer layer 84, the second primer layer 85, and the radiation cured coating layer 86 are identical with the release sheet 11, the pressure sensitive adhesive layer 12, the decorative layer 13, the first primer layer 53, the primer layer 14, and the radiation cured coating layer 15 respectively of the first or second embodiment, and consequently description of these components is omitted.

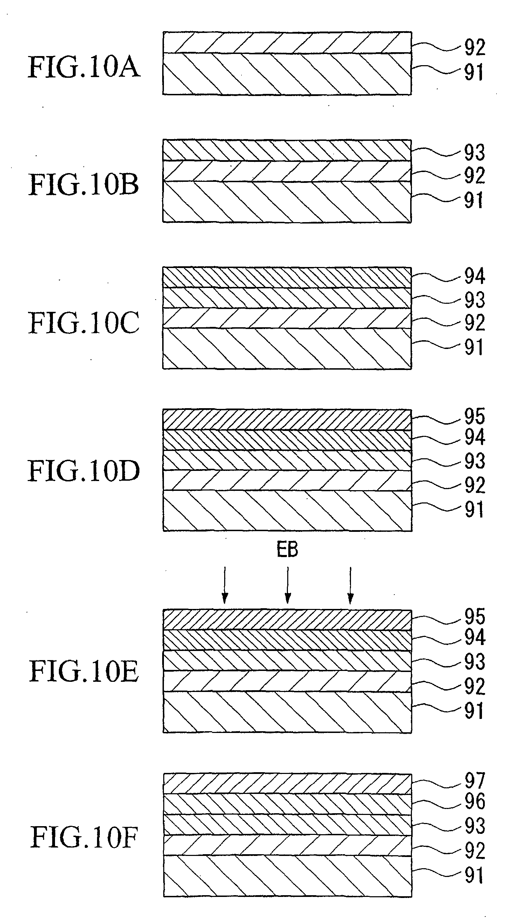

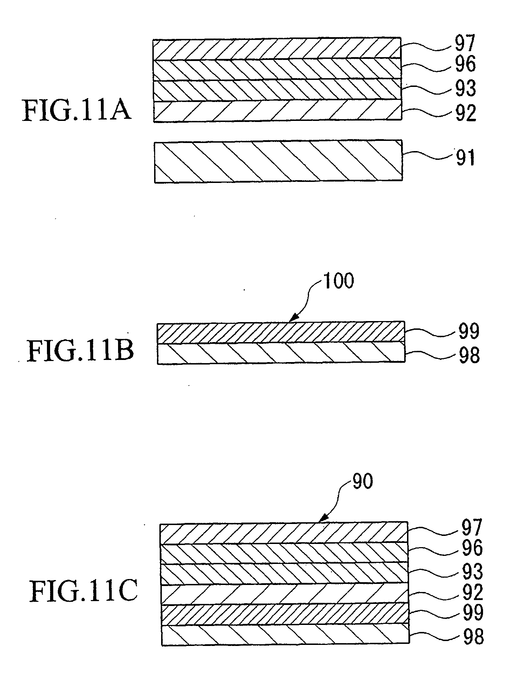

Next is a description of a production process for a decorative sheet according to the third embodiment, with reference to FIG. 10 and FIG. 11.

In this production process, first, in a decorative layer formation step shown in FIG. 10A, a printed pattern is formed on the surface of a releasable film 91 using a colored ink comprising a binder component containing at least 25% by weight of a thermoplastic resin component containing at least one of a vinyl chloride-vinyl acetate copolymer resin, and an acrylic based resin such as an acrylic polyol resin, and a coloring component, thus forming a decorative layer 92. In the binder component of the colored ink, the thermoplastic resin containing at least one of a vinyl chloride-vinyl acetate copolymer resin, and an acrylic based resin such as an acrylic polyol resin may account for 100% by weight of the component.

Next, in a first primer layer formation step shown in FIG. 10B, a first primer material comprising at least 25% by weight of a thermoplastic resin component containing at least one of a vinyl chloride-vinyl acetate copolymer resin, an acrylic based resin, and a urethane based resin is applied to the surface of the decorative layer 92, and subsequently dried using a dryer or the like, thus forming a first primer layer 93. In the first primer material, the thermoplastic resin containing at least one of a vinyl chloride-vinyl acetate copolymer resin, an acrylic based resin and a urethane based resin may account for 100% by weight of the primer material.

Subsequently, in a second primer coating formation step shown in FIG. 10C, a second primer material comprising a resin component containing at least 25% by weight of at least one of a radiation curable resin formed from an acrylic based oligomer, an acrylic based resin and a urethane based resin is applied to the surface of the first primer layer 93 and then dried to form a second primer coating 94. In the second primer material, the radiation curable resin formed from an acrylic based oligomer, the acrylic based resin or the urethane based resin may account for 100% by weight of the primer material.

At this point, the sheet that has been generated in the previous steps may be wound, and then transported to the location used for conducting the next step. In such cases, the composition of the second primer coating 94 is preferably selected so that the second primer coating 94 does not adhere to the releasable film 91.

Next, in a curable coating application step shown in FIG. 10D, a solventless radiation curable coating material 95 is applied to the surface of the second primer coating 94.

Subsequently, in a curing step shown in FIG. 10E, an electron beam (EB) is irradiated onto the second primer coating 94 containing the acrylic based oligomer, and the radiation curable coating material 95, under conditions including a nitrogen gas atmosphere (with a residual oxygen concentration of 100 ppm), an absorbed dose of 7 Mrad, and a passage speed of 50 m/min. As a result, as shown in FIG. 10F, the second primer coating 94 undergoes curing to form a second primer layer 96, while the radiation curable coating material 95 also undergoes curing, forming a radiation cured coating layer 97.

Subsequently, in a pressure sensitive adhesive layer formation step shown in FIG. 11A, the releasable film 91 is removed from the decorative layer 92. On the other hand, in a separate pressure sensitive adhesive sheet formation step shown in FIG. 11B, a pressure sensitive adhesive is applied to the surface of a release sheet 98 to form a pressure sensitive adhesive layer 99, thus forming a pressure sensitive adhesive sheet 100. Then, as shown in FIG. 11C, the pressure sensitive adhesive sheet 100 is bonded to the decorative layer 92 via the surface of the pressure sensitive adhesive layer 99, and the resulting construction is cured for 2 days at 40 to 50°C, thus yielding a decorative sheet 90.

In the production process described above, as was the case with the first and second embodiments, a photoinitiator can be added to the second primer material and the radiation curable coating material, enabling these materials to be cured by irradiation with ultraviolet light. Furthermore, a protective film may also be formed on top of the radiation cured coating layer of the product decorative sheet. In addition, the resin component of the first primer material may also comprise up to 75% by weight of a radiation curable resin formed from an acrylic based oligomer.

The third embodiment is particularly suited to decorative sheets in which the decorative layer 92 is partially printed. Here, the term "partially printed" refers to printing in which a colored ink is applied to a portion of the surface. Thus, in the present embodiment, because the first primer layer is formed on top of the partially printed decorative layer, both the decorative layer and the first primer layer display increased adhesion to the pressure sensitive adhesive, enabling a reduction in adhesive transferability.

As described above, decorative sheets according to any of the first through third embodiments display excellent levels of designability, abrasion resistance, weather resistance and solvent resistance, and consequently can be used for construction members such as walls, pillars and doors and the like, as well as for vehicles, ships, billboards and signs. Moreover, because the shrinkage factor is small, the decorative sheets are particularly useful as sash tapes for automobiles and display films for vehicles.

In the first through third embodiments, a pressure sensitive adhesive layer was formed on the surface of either a decorative layer or a first primer layer, although the present invention is not restricted to these configurations, and the pressure sensitive adhesive layer may be omitted. In such cases, a pressure sensitive adhesive is applied to the substrate on which the decorative sheet is to be formed, and the decorative layer or the first primer layer is then laid over, and bonded to, this pressure sensitive adhesive. The present invention enables the adhesion between the adhesive and the decorative layer or first primer layer to be improved.

### (Fourth Embodiment)

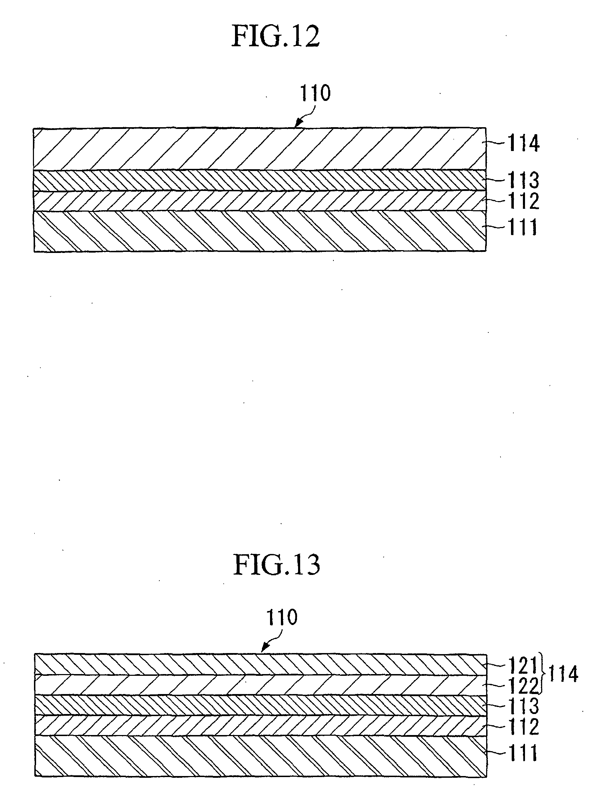

A fourth embodiment according to the present invention presents another decorative sheet. This decorative sheet is described below with reference to FIG. 12. This decorative sheet 110 has a single primer layer, and comprises a release sheet 111, a pressure sensitive adhesive layer 112 that contacts the release sheet 111, a primer layer 113 that contacts the pressure sensitive adhesive layer 112, and a radiation cured coating layer 114 that contacts the primer layer 113.

The radiation cured coating layer 114 has an identical configuration to the radiation cured coating layer 15 of the first embodiment; and is consequently not described here.

The primer layer 113 comprises from 25 to 75% by weight, and preferably from 30 to 70% by weight, and even more preferably from 35 to 65% by weight, of a cured product of a radiation curable resin containing an acrylic based oligomer, and from 25 to 75% by weight, and preferably from 30 to 70% by weight, and even more preferably from 35 to 65% by weight, of a thermoplastic resin containing at least one of a vinyl chloride-vinyl acetate copolymer resin, an acrylic based resin and a urethane based resin.

If the quantity of the cured product of the radiation curable resin is less than 25% by weight, then the adhesive strength of the primer layer 113 relative to the adjacent radiation cured coating layer 114 deteriorates, whereas if the quantity of the thermoplastic resin is less than 25% by weight, then the adhesive strength relative to the adjacent pressure sensitive adhesive layer 112 deteriorates.

The radiation curable resin used in the primer layer 113 contains an acrylic based oligomer. Suitable examples of the acrylic based oligomer include the same oligomers used for the radiation cured coating layer 114, namely urethane acrylate oligomers, ester acrylate oligomers, epoxy acrylate oligomers and acrylic resin acrylates. Of these, urethane acrylate oligomers and acrylic resin acrylates are preferred. In those cases where a urethane acrylate oligomer is used in both the primer layer 113 and the radiation cured coating layer 114, the weight average molecular weight of the urethane acrylate oligomer contained within the primer layer 113 is preferably approximately equal to the weight average molecular weight of the urethane acrylate oligomer used in the radiation cured coating layer 114. This type of urethane acrylate oligomer displays favorable properties in terms of viscosity adjustment by addition of a solvent, and dispersibility with thermoplastic resins, which improves the ease with which a film of the primer material can be formed.

Acrylic resin acrylates are materials produced by first copolymerizing an acrylic copolymer resin comprising a polymethyl methacrylate as the primary component, with a (meth)acrylate monomer containing a functional group such as a carboxyl group, an epoxy group or a hydroxyl group, and then performing an addition reaction with an acrylate monomer with a functional group capable of undergoing an addition reaction with the above functional groups, thereby introducing double bonds into the resin. Cured products of these types of acrylic resin acrylates display excellent weather resistance and solvent resistance, in a similar manner to cured products of urethane acrylate oligomers.

Furthermore, examples of possible oligomers other than acrylic based oligomers include allyl ether based oligomers, allyl urethane based oligomers, and vinyl ether based oligomers.

Furthermore, incorporating a thermoplastic resin containing at least one of a vinyl chloride-vinyl acetate copolymer resin, an acrylic based resin and a urethane based resin within the primer layer 113 improves the adhesion of the layer to the pressure sensitive adhesive, enabling the adhesive transferability to be reduced. Furthermore, the applicability of the layer to gravure coating improves, and the physical properties of the applied coating also improve.

There are no particular restrictions on the vinyl chloride-vinyl acetate copolymers that can be used, although in terms of ensuring suitability as an ink, the vinyl chloride / vinyl acetate weight ratio within the copolymer is preferably within a range from 92/8 to 75/25, and the weight average molecular weight is preferably within a range from 25,000 to 40,000.

If an acrylic based resin such as an acrylic polyol is incorporated within the primer layer 113, then the reactivity of the material on curing can be increased. Furthermore, the adhesion to the pressure sensitive adhesive can be further improved, enabling a further lowering of the adhesive transferability. Furthermore, the applicability of the primer material to gravure coating is also further enhanced.

Furthermore, the primer layer 113 may also contain a benzotriazole based ultraviolet absorber and a hindered amine based photostabilizer, as described above. Including a benzotriazole based ultraviolet absorber and a hindered amine based photostabilizer in the primer layer 113 improves the weather resistance of the decorative sheet even further.

Furthermore, colored pigments may also be added to the primer layer 113. Examples of suitable colored pigments include the same pigments that are suitable for inclusion within the radiation cured coating layer. By incorporating a colored pigment into the primer layer 113, the decorative design of the product decorative sheet can be improved even further.

The thickness of the primer layer 113 is preferably within a range from 0.3 to 10 µm, and preferably from 0.5 to 7 µm. If the thickness of the primer layer 113 is less than 0.3 µm, then there is a danger that the adhesive strength between the radiation cured coating layer 114 and the pressure sensitive adhesive layer 112 may be unsatisfactory, whereas if the thickness exceeds 10 µm, then the layer becomes thicker than is necessary, which simply increases the cost.

There are no particular restrictions on the pressure sensitive adhesive layer 112, provided it bonds to the primer layer, and is formed from a pressure sensitive adhesive with excellent weather resistance. Suitable examples of this type of pressure sensitive adhesive include acrylic based adhesives comprising an acrylic polymer and a tackifier. Suitable examples of the monomer units that form the acrylic polymer within such acrylic based adhesives include alkyl (meth)acrylates such as methyl (meth)acrylate, ethyl (meth)acrylate, n-propyl (meth)acrylate and butyl (meth)acrylate. Examples of suitable tackifiers include rosin based tackifiers, terpene based tackifiers, phenol based tackifiers and coumarone based tackifiers.

The thickness of the pressure sensitive adhesive layer 112 can be any typically used thickness, although thickness values within a range from 30 to 100 µm are preferred. If the thickness of the pressure sensitive adhesive layer 112 is less than 30 µm, then there is a danger of the adhesive strength being inadequate when the decorative sheet is bonded to a substrate, whereas if the thickness exceeds 100 µm, the layer becomes thicker than is necessary, which simply increases the cost.

There are no particular restrictions on the release sheet 111, provided it does not bond with the pressure sensitive adhesive, and suitable examples include sheets formed from polyethylene terephthalate, polyethylene or polypropylene, as well as paper coated with a release agent such as silicone.

From the viewpoints of ease of handling and cost, the thickness of the release sheet 111 is preferably within a range from 25 to 50 µm.

In a decorative sheet according to the fourth embodiment described above, the radiation cured coating layer 114 can also be constructed from a plurality of layers, as shown in FIG. 13 (in the figure, the radiation cured coating layer 114 comprises an upper layer 121 and a lower layer 122). In this type of case, a different coloring pigment can be added to each of the plurality of layers. By forming the radiation curable coating layer 114 from a plurality of layers, and adding a different coloring pigment to each of the plurality of layers, the decorative design can be improved even further. Furthermore, by making the upper layer transparent, while incorporating a coloring component within the lower layer, the surface luster of the sheet can be improved.

Next is a description of a production process for producing the decorative sheet described above, with reference to FIG. 3.

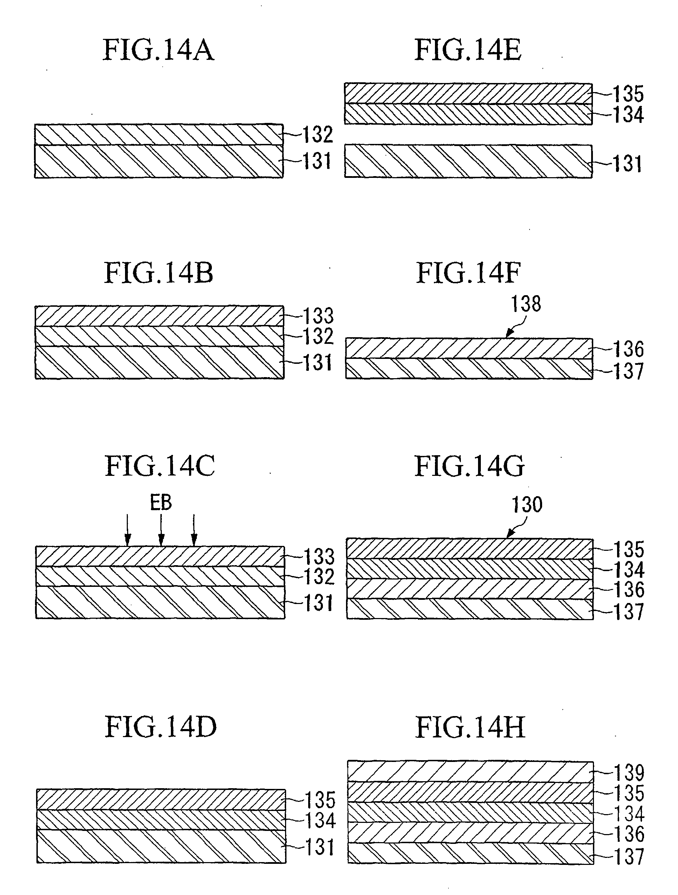

In this production process, first, in a primer coating formation step shown in FIG. 14A, a primer material solution, comprising from 25 to 75% by weight of a radiation curable resin component containing an acrylic based oligomer such as a urethane acrylate oligomer or an acrylic resin acrylate, and from 25 to 75% by weight of a thermoplastic resin component containing at least one of a vinyl chloride-vinyl acetate copolymer resin and an acrylic based resin, diluted in a mixed solvent of a ketone based solvent such as methyl ethyl ketone or methyl isobutyl ketone, and an ester based solvent such as ethyl acetate (so that the solid fraction within the solution is diluted to 25 to 40% by weight), is applied to the surface of a releasable film 131, and subsequently dried using a dryer or the like, thus forming a primer coating 132. The releasable film 131 is a film with a surface to which the primer coating 132 will not bond, and suitable examples include the same films described for the release sheet 111, namely, sheets formed from polyethylene terephthalate, polyethylene or polypropylene, as well as paper coated with a release agent such as silicone.

Subsequently, in a curable coating application step shown in FIG. 14B, a commercially available radiation curable coating material 133 is applied to the surface of the primer coating 132.

Next, in a curing step shown in FIG. 14C, an electron beam (EB) is irradiated onto the primer coating 132 and the radiation curable coating material 133, under conditions including a nitrogen gas atmosphere (with a residual oxygen concentration of 100 ppm), an absorbed dose of 7 Mrad, and a passage speed of 50 m/min. When the electron beam (EB) is irradiated onto the acrylic based oligomers such as urethane acrylate oligomers and acrylic resin acrylates, and the reactive monomers contained within the primer coating 132 and the radiation curable coating material 133, radicals are generated within the unsaturated groups of the acrylates, and these radicals cause a polymerization of the acrylates, resulting in curing. As a result, as shown in FIG. 14D, the primer coating 132 undergoes curing to form a primer layer 134, while the radiation curable coating material 133 also undergoes curing, forming a radiation cured coating layer 135.

Subsequently, in a pressure sensitive adhesive layer formation step shown in FIG. 14E, the releasable film 131 is removed from the primer layer 134. At the same time, in a separate pressure sensitive adhesive sheet formation step shown in FIG. 14F, a pressure sensitive adhesive is applied to the surface of a release sheet 137 to form a pressure sensitive adhesive layer 136, thus forming a pressure sensitive adhesive sheet 138. Then, as shown in FIG. 14G, the pressure sensitive adhesive sheet 138 is bonded to the primer layer 134 via the surface of the pressure sensitive adhesive layer 136, and the resulting construction is cured for 2 days at 40 to 50°C, thus yielding a decorative sheet 130.

In addition, as shown in FIG. 14H, a protective film 139 comprising a polyolefin film or a polyethylene terephthalate film or the like, may also be formed on top of the radiation cured coating layer 135 of the product decorative sheet 130. Providing a protective film 139 prevents the decorative sheet from becoming scratched prior to use.

Details relating to the application of the primer material and the radiation curable coating, primer material, radiation curable coating, and the addition of a photoinitiator to the primer material and the radiation curable coating and subsequent curing, as well as details about the type of photoinitiator, the quantity added and the use of photoinitiator assistants are all identical with those described in relation to the first embodiment, and consequently description of these details here is omitted.

As described above, in a decorative sheet 110 according to the fourth embodiment, the primer layer 113 comprises a cured product of a radiation curable resin containing an acrylic based oligomer with excellent weather resistance such as a urethane acrylate oligomer or an acrylic resin acrylate, as well as a thermoplastic resin containing at least one of a vinyl chloride-vinyl acetate copolymer resin, an acrylic based resin and a urethane based resin, and consequently the adhesion of the primer layer 113 to both the radiation cured coating layer 114 and the pressure sensitive adhesive layer 112 can be improved, enabling a reduction in the adhesive transferability.

Furthermore, in a typical cured product of a radiation curable resin containing an acrylic based oligomer, the low molecular weight component has undergone curing by cross linking, and consequently the level of internal strain is low, meaning the dimensional stability of the decorative sheet 110 is excellent, and the shrinkage factor in heat resistance tests is low. Furthermore, the radiation cured coating layer 114 and the primer layer 113 can be either colored freely or kept transparent, thus enabling the level of decorative design of the decorative sheet 110 to be improved. Furthermore, because the decorative sheet comprises no plasticizers, bleed out does not occur, and soiling resistance is high. Furthermore, the hardness of the cured product of the radiation curable resin can be set as desired, and provided this cured product is incorporated within the surface layer, the abrasion resistance and flexibility can be improved.

Furthermore in the production process for the decorative sheet, in the curing step, the applied primer coating 132 and the radiation curable coating material 133 can be irradiated with an electron beam (EB), enabling the primer layer 134 and the radiation cured coating layer 135 to be formed simultaneously. As a result, the production of the decorative sheet is highly efficient. Furthermore, because the quantity of solvent used can be reduced, the costs associated with ensuring a safe working environment can be reduced. Furthermore, because a low molecular weight component is applied and then cured, distortion within the product decorative sheet 130 is minimal, and the shrinkage factor in heat resistance tests can be reduced.

In addition, because the radiation cured coating layer 135 and the pressure sensitive adhesive layer 136 are bonded together via the primer layer 134, the adhesive transferability can be further reduced.

Furthermore, in the pressure sensitive adhesive layer formation step, the releasable film 131 is removed from the primer layer 134, and if this primer layer 134 is bonded to the pressure sensitive adhesive layer 136 of the pressure sensitive adhesive sheet 138 obtained in the pressure sensitive adhesive sheet formation step, then not only is the process simple, but the surface is protected from scratching, meaning the above decorative sheet 130 can be formed easily and with a high level of quality.

In the fourth embodiment described above, the primer layer was a single layer, although the present invention is not restricted to such a configuration, and two or more primer layers may be provided between the pressure sensitive adhesive layer and the curable coating layer. As follows is a description of a fifth embodiment, in which two primer layers are provided between the pressure sensitive adhesive layer and the radiation cured coating layer.

### (Fifth Embodiment)

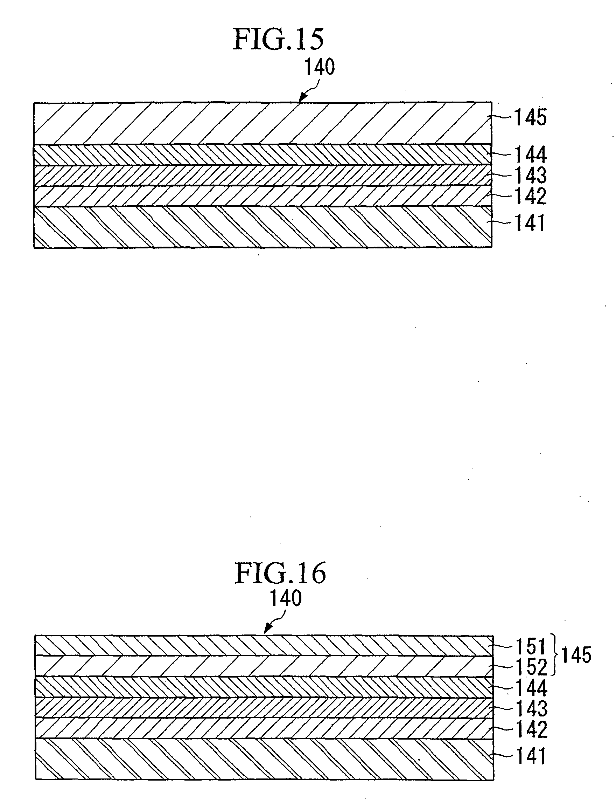

A fifth embodiment according to the present invention is a different decorative sheet. This decorative sheet is described with reference to FIG. 15. This decorative sheet 140 has a primer layer containing two layers, and comprises a release sheet 141, a pressure sensitive adhesive layer 142 that contacts the release sheet 141, a first primer layer 143 that contacts the pressure sensitive adhesive layer 142, a second primer layer 144 that contacts the first primer layer 143, and a radiation cured coating layer 145 that contacts the second primer layer 144.

In this embodiment, the release sheet 141, the pressure sensitive adhesive layer 142, and the radiation cured coating layer 145 are identical with the release sheet 111, the pressure sensitive adhesive layer 112, and the radiation cured coating layer 114 respectively of the fourth embodiment, and consequently description of these components is omitted.

The first primer layer 143 comprises at least 25% by weight of a thermoplastic resin containing at least one of a vinyl chloride-vinyl acetate copolymer resin, an acrylic based resin and a urethane based resin. By ensuring that the first primer layer 143 comprises at least 25% by weight of a vinyl chloride-vinyl acetate copolymer resin or the like, the adhesion of the layer to the pressure sensitive adhesive layer 142 can be improved. The vinyl chloride-vinyl acetate copolymer can use the same copolymers that were described as being suitable for the primer layer 113 of the fourth embodiment. If the first primer layer 143 contains an acrylic based resin, then the first primer layer 143 can be cured by irradiation.

Furthermore, the first primer layer 143 may contain not less than 75% by weight of a cured product of a radiation curable resin containing an acrylic based oligomer such as a urethane acrylate oligomer or an acrylic resin acrylate. By incorporating a cured product of a radiation curable resin within the first primer layer 143, the weather resistance, the solvent resistance, and the adhesion of the layer to the second primer layer 144 can all be improved.

The second primer layer 144 comprises a cured product of a radiation curable resin containing an acrylic based oligomer such as a urethane acrylate oligomer or an acrylic resin acrylate. By incorporating a cured product of a radiation curable resin within the second primer layer 144, the adhesion of the layer to the radiation cured coating layer 145 can be improved.

Examples of suitable acrylic based oligomers such as urethane acrylate oligomers or acrylic resin acrylates include the same oligomers described in the fourth embodiment. Furthermore, in a similar manner to the fourth embodiment, in this embodiment, the weight average molecular weight of a urethane acrylate oligomer contained within the second primer layer 144 is preferably approximately equal to the weight average molecular weight of a urethane acrylate oligomer used in the radiation cured coating layer 145.

Furthermore, the second primer layer 144 can also contain not less than 75% by weight of a thermoplastic resin containing at least one of a vinyl chloride-vinyl acetate copolymer resin, an acrylic based resin and a urethane based resin. By incorporating a vinyl chloride-vinyl acetate copolymer resin or the like in the second primer layer 144, the adhesion of the layer to the first primer layer 143 can be further improved.

The first primer layer 143 and the second primer layer 144 may also contain a coloring pigment. If a coloring component is added not only to the radiation curable coating layer 145, but also to the first primer layer 143 and the second primer layer 144, then the level of decorative design of the product decorative sheet can be further improved.

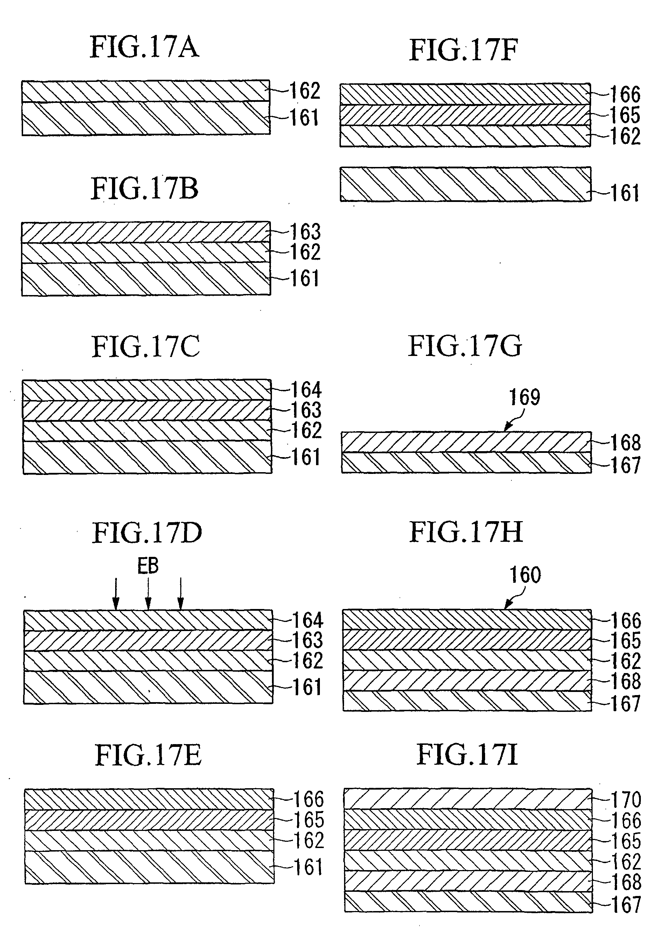

As was the case with the fourth embodiment, in this embodiment the radiation cured coating layer 145 may comprise a plurality of layers, as shown in FIG. 16.

Next is a description of a production process for the decorative sheet described above, with reference to FIG. 17.

In this production process, first, in a first primer layer formation step shown in FIG. 17A, a first primer material (solid fraction: approximately 25 to 35%) comprising a resin component containing at least 25% by weight of at least one of a vinyl chloride-vinyl acetate copolymer resin, an acrylic based resin and a urethane based resin is applied to the surface of a releasable film 161, and the solvent contained within the primer material is then removed by drying to form a first primer layer 162. The releasable film 161 can use the same types of films described as suitable for the releasable film 131 of the fourth embodiment.

Subsequently, in a second primer coating formation step shown in FIG. 17B, a second primer material (solid fraction: approximately 25 to 40%) comprising a resin component containing at least 25% by weight of a radiation curable resin containing an acrylic based oligomer such as a urethane acrylate oligomer or an acrylic resin acrylate is applied to the surface of the first primer layer 162, and the solvent contained within the primer material is then removed by drying to form a second primer coating 163.

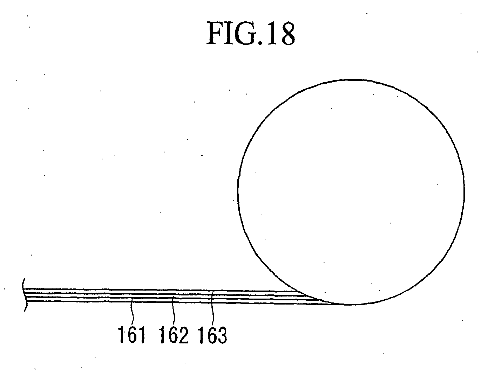

The process may then proceed, as is, to the next step, although if required, the sheet comprising the first primer layer 162 and the second primer coating 163 formed on the releasable film 161 may also be wound as shown in FIG. 18, and then transported to the location used for conducting the next step. In such cases, the composition of the second primer coating 163 is preferably selected so that the second primer coating 163 does not adhere to the releasable film 161.

Subsequently, in a curable coating application step shown in FIG. 17C, a commercially available radiation curable coating material 164 is applied to the surface of the second primer coating 163.

Next, in a curing step shown in FIG. 17D, an electron beam (EB) is irradiated onto the second primer coating 163 and the radiation curable coating material 164, under conditions including a nitrogen gas atmosphere (with a residual oxygen concentration of 100 ppm), an absorbed dose of 7 Mrad, and a passage speed of 50 m/min. When the electron beam (EB) is irradiated onto the acrylic based oligomers such as urethane acrylate oligomers and acrylic resin acrylates, and the reactive monomers contained within the second primer coating 163 and the radiation curable coating material 164, radicals are generated within the unsaturated groups of the acrylates, and these radicals cause a polymerization of the acrylates, resulting in curing. As a result, as shown in FIG. 17E, the second primer coating 163 undergoes curing to form a second primer layer 165, while the radiation curable coating material 164 also undergoes curing, forming a radiation cured coating layer 166.

Subsequently, in a pressure sensitive adhesive layer formation step shown in FIG. 17F, the releasable film 161 is removed from the first primer layer 162. On the other hand, in a separate pressure sensitive adhesive sheet formation step shown in FIG. 17G, a pressure sensitive adhesive is applied to the surface of a release sheet 167 to form a pressure sensitive adhesive layer 168, thus forming a pressure sensitive adhesive sheet 169. Then, as shown in FIG. 17H, the pressure sensitive adhesive sheet 169 is bonded to the first primer layer 162 via the surface of the pressure sensitive adhesive layer 168, and the resulting construction is cured for 2 days at 40 to 50°C, thus yielding a decorative sheet 60.

In addition, as shown in FIG. 17I, a protective film 170 comprising a polyolefin film or a polyethylene terephthalate film or the like, may also be formed on top of the radiation cured coating layer 166 of the product decorative sheet 60. Providing a protective film 170 prevents the decorative sheet from becoming scratched prior to use.

In the production process described above, the first primer layer may contain not less than 75% by weight of a radiation curable resin such as an acrylic based oligomer. In such cases, the first primer coating can be cured by irradiation together with the second primer coating and the radiation curable coating material, enabling the production efficiency to be further improved.

Furthermore, the second primer material may contain not less than to 75% by weight of a thermoplastic resin containing at least one of an acrylic based resin such as an acrylic polyol or a vinyl chloride-vinyl acetate copolymer resin. In such cases, the adhesion of the second primer coating to the first primer layer can be further enhanced.

As in the fourth embodiment, in the fifth embodiment there are no particular restrictions on the method used for applying the primer material and the curable coating material, and similar application methods to those described in the fourth embodiment can be employed. Furthermore, in a similar manner to the fourth embodiment, the first primer material and the second primer material are preferably applied using a gravure coating method, as this enables a further improvement in the adhesion with the pressure sensitive adhesive, whereas the radiation curable coating material 164 is preferably applied using a die coating method, as this enables the entrapment of bubbles and impurities to be minimized.

Furthermore, a photoinitiator may be added to the second primer coating 163 and the radiation curable coating material 164, and these coatings can then be cured by ultraviolet irradiation. In those cases where the first primer material contains a radiation curable resin such as a urethane acrylate oligomer, a photoinitiator may also be added to the first primer material. Examples of suitable photoinitiators include the same materials described in the fourth embodiment.

As described above, in a decorative sheet 140 according to the fifth embodiment, the radiation cured coating layer 145 and the second primer layer 144 each comprise a cured product of a radiation curable resin containing an acrylic based oligomer with excellent weather resistance such as a urethane acrylate oligomer or an acrylic resin acrylate, and consequently the weather resistance of the decorative sheet 140 is also excellent. Furthermore, the cured product of the radiation curable resin containing the acrylic based oligomer has undergone cross linking, and is consequently insoluble in solvents and displays excellent solvent resistance. Furthermore, in a typical cured product of a radiation curable resin containing an acrylic based oligomer, the low molecular weight component has undergone curing by cross linking, and consequently the level of internal strain is low, meaning the dimensional stability of the decorative sheet 140 is excellent, and the shrinkage factor in heat resistance tests is low. Furthermore, the first primer layer 143, the second primer layer 144, and the radiation cured coating layer 145 can be either colored freely or kept transparent, thus enabling the level of decorative design of the decorative sheet 140 to be improved. Furthermore, because the decorative sheet comprises no plasticizers, bleed out does not occur, enabling soiling resistance to also be improved. Furthermore, the hardness of the radiation cured coating layer 145 can be set as desired, and consequently the abrasion resistance and the flexibility can be improved.

Furthermore, the first primer layer 143 comprises a thermoplastic resin containing at least one of a vinyl chloride-vinyl acetate copolymer resin, an acrylic based resin and a urethane based resin, and consequently the adhesion of the layer to the pressure sensitive adhesive layer 142 can be improved, and the adhesion of the second primer layer 144 to both the first primer layer 143 and the radiation cured coating layer 145 can also be improved, meaning the adhesive transferability of the pressure sensitive adhesive layer 142 can be lowered.

Furthermore, in a production process for this decorative sheet, in the curing step, the applied second primer coating 163 and the radiation curable coating material 164 can be irradiated with an electron beam or ultraviolet light, enabling the second primer coating 165 and the radiation cured coating layer 166 to be formed simultaneously. As a result, the production of the decorative sheet 60 is highly efficient. Furthermore, because the quantity of solvent used can be reduced, the costs associated with ensuring a safe working environment can be reduced. Furthermore, because a low molecular weight component is applied and then cured by cross linking, distortion within the product decorative sheet 60 is minimal, the dimensional stability is excellent, and the shrinkage factor in heat resistance tests can be reduced.

In addition, because the radiation cured coating layer 166 and the pressure sensitive adhesive layer 168 are bonded together via the first primer layer 162 and the second primer coating 165, the adhesive transferability can be further reduced.

Furthermore, in the pressure sensitive adhesive layer formation step, the releasable film 161 is removed from the first primer layer 162, and if this first primer layer 162 is bonded to the pressure sensitive adhesive layer 168 of the pressure sensitive adhesive sheet 169 obtained in the pressure sensitive adhesive sheet formation step, then not only is the process simple, but the surface is protected from scratching, meaning the above decorative sheet 60 can be formed easily and with a high level of quality.

In the fourth and fifth embodiments described above, the primer layer was either a single layer or a double layer, although the present invention is not restricted to such a configuration, and three or more primer layers may also be used. In those cases where three or more primer layers are used, a different layer may exist between the first primer layer and the second primer layer, and this layer is preferably formed from a composition that bonds strongly to both the first primer layer and the second primer layer.

As described above, decorative sheets of the present invention display excellent levels of designability, abrasion resistance, weather resistance and solvent resistance, and consequently can be used for construction members such as walls, pillars and doors and the like, as well as for vehicles, ships, billboards and signs. Moreover, because the shrinkage factor during heat tests is small, the decorative sheets are particularly useful as sash tapes for automobiles.

### EXAMPLES

### (Example 1)

A first primer material comprising 100 parts by weight (100% by weight of the resin component) of a vinyl chloride-vinyl acetate copolymer resin (MKK MEDIUM, manufactured by Showa Ink Manufacturing Co., Ltd., solid fraction: 25% by weight) was applied to a releasable film of stretched polyethylene terephthalate using a gravure coating method, and was then dried to form a first primer layer.

Subsequently, a plurality of colored inks were prepared by mixing a variety of different colored pigments with 100 parts by weight samples (100% by weight of the resin component) of the above vinyl chloride-vinyl acetate copolymer resin (MKK MEDIUM, manufactured by Showa Ink Manufacturing Co., Ltd., solid fraction: 25% by weight), and using a multi-colored gravure printer, a printed pattern was then formed on top of the first primer layer, thus forming a decorative layer.

Next, a second primer material comprising 100 parts by weight (100% by weight of the resin component) of a urethane acrylate oligomer (CSEB5 MEDIUM, manufactured by Showa Ink Manufacturing Co., Ltd., solid fraction: 40% by weight), and 3.0 parts by weight of a photoinitiator (IRGACURE 819, manufactured by Ciba Specialty Chemicals Inc.) diluted to a solid fraction concentration of 35% by weight using a dilution solvent (MEK / MIBK / ethyl acetate = 50/30/20) was applied to the surface of the decorative layer using a gravure coating method, and was then dried to form a second primer coating with a thickness of 3 µm.

Subsequently, a coating material comprising 100 parts by weight of a solventless radiation curable coating material (KRM7818, a urethane acrylate based material manufactured by Daicel UCB Co., Ltd.), 1.5 parts by weight of each of a photoinitiator 1 (IRGACURE 184, manufactured by Ciba Specialty Chemicals Inc.) and a photoinitiator 2 (IRGACURE 819, manufactured by Ciba Specialty Chemicals Inc.), 1.0 parts by weight of a benzotriazole based ultraviolet absorber (TINUVIN 400, manufactured by Ciba Specialty Chemicals Inc.), and 1.0 parts by weight of a hindered amine based photostabilizer (TINUVIN 290, manufactured by Ciba Specialty Chemicals Inc.) was applied to the surface of the formed second primer coating using a die coating method, thus forming a coating with a thickness of 150 µm.

The layered construction was then cured by irradiation with ultraviolet light from the side of the radiation curable coating, by passage through a nitrogen gas environment (with a residual oxygen concentration of 100 ppm) under two 120 W/cm long wavelength, high pressure mercury lamps, using a passage speed of 30 m/minute, thus forming a second primer coating and a radiation cured coating layer (surface hardness: pencil hardness F). Subsequently, the polyethylene terephthalate film was removed from the first primer layer, a pressure sensitive adhesive layer of thickness 50 µm formed on a release sheet was bonded to the first primer layer, and the resulting construction was cured for 2 days at 40 to 50°C, thus yielding a decorative sheet.

The thus produced decorative sheet was evaluated using the tests described below. The results are shown in Table 1.

### (Initial Peel Strength)

The product decorative sheet was cut into a square sample of dimensions 150 mm × 150 mm, the pressure sensitive adhesive layer was bonded to an aluminum plate of thickness 1 mm, and following curing for 2 days at 23°C, the sheet, which had been cut into strips of width 25 mm, was peeled from the plate at room temperature using a peel speed of 200 m/minute at an angle of 180°. Five strip samples were tested, and the average of the samples was evaluated against the following standards.
○: The pressure sensitive adhesive layer of the sheet remained bonded to at least 90% of the surface area of the sheet.
Δ: The pressure sensitive adhesive layer of the sheet remained bonded to at least 30%, but less than 90% of the surface area of the sheet.
×: The pressure sensitive adhesive layer of the sheet remained bonded to less than 30% of the surface area of the sheet.

### (Peel Strength following Heat Resistance Test)

The product decorative sheet was cut into a square sample of dimensions 150 mm × 150 mm, the pressure sensitive adhesive layer was bonded to an aluminum plate of thickness 1 mm, arid following curing for 1 days at 23°C, the sheet was placed in a thermostat at 80°C for 48 hours, and then left to stand for a further 24 hours at room temperature. The sheet, which had been cut into strips of width 25 mm, was then peeled from the plate at room temperature using a peel speed of 200 m/minute at an angle of 180°. Five strip samples were tested, and the average of the samples was evaluated against the following standards.
○: The pressure sensitive adhesive layer of the sheet remained bonded to at least 90% of the surface area of the sheet.
Δ: The pressure sensitive adhesive layer of the sheet remained bonded to at least 30%, but less than 90% of the surface area of the sheet.
×: The pressure sensitive adhesive layer of the sheet remained bonded to less than 30% of the surface area of the sheet.

### (Peel Strength following Weather Resistance Test)

The product decorative sheet was cut into a square sample of dimensions 150 mm × 150 mm, the pressure sensitive adhesive layer was bonded to an aluminum plate of thickness 1 mm, and following curing for 1 days at 23°C, the sheet was exposed to a sunshine weather meter (WEL-SUN-DC, manufactured by Suga Test Instruments Co., Ltd.) for 2000 hours, and was then returned to room temperature for a further 24 hours. The sheet, which had been cut into strips of width 25 mm, was then peeled from the plate at room temperature using a peel speed of 200 m/minute at an angle of 180°. Five strip samples were tested, and the average of the samples was evaluated against the following standards.
○: The pressure sensitive adhesive layer of the sheet remained bonded to at least 90% of the surface area of the sheet.
Δ: The pressure sensitive adhesive layer of the sheet remained bonded to at least 30%, but less than 90% of the surface area of the sheet.
×: The pressure sensitive adhesive layer of the sheet remained bonded to less than 30% of the surface area of the sheet.

**Table 1**

| | | | Example 1 | Example 2 | Example 3 | Example 4 | Example 5 | Example 6 |
|---|---|---|---|---|---|---|---|---|
| Decorative layer | vinyl chloride-vinyl acetate copolymer resin | parts by weight | 100 | 100 | 80 | 100 | 100 | 60 |
| | acrylic based resin | | | | 20 | | | 40 |
| First primer material | (acrylic based oligomer) | parts by weight | | | | | | |
| | urethane acrylate oligomer | | | 50 | | | | |
| | acrylic resin acrylate oligomer | | | | | | 30 | |
| | photoinitiator | parts by weight | | 1.5 | | | 1.0 | |
| | (thermoplastic resin) | parts by weight | | | | | | |
| | vinyl chloride-vinyl acetate copolymer resin | | 100 | 50 | | 70 | | |
| | urethane based resin | | | | | | 40 | 100 |
| | acrylic based resin | | | | | 30 | 30 | |
| Second primer material | (acrylic based oligomer) | parts by weight | | | | | | |
| | urethane acrylate oligomer | | 100 | 100 | 80 | 50 | 100 | 70 |
| | acrylic resin acrylate oligomer | | | | | 30 | | |
| | photoinitiator | parts by weight | 3.0 | 3.0 | 2.4 | 3.0 | 3.0 | 2.1 |
| | (thermoplastic resin) | parts by weight | | | | | | |
| | vinyl chloride-vinyl acetate copolymer resin | | | | 20 | | | |
| | urethane based resin | | | | | | | 30 |
| | acrylic based resin | | | | | 20 | | |
| Curable coating material | KRM7818 | parts by weight | 100 | 100 | 100 | | 100 | 100 |
| | KRM7842 | parts by weight | | | | 100 | | |
| | photoinitiator 1 | parts by weight | 1.5 | 1.5 | 1.5 | 1.5 | 1.5 | 1.5 |
| | photoinitiator 2 | parts by weight | 1.5 | 1.5 | 1.5 | 1.5 | 1.5 | 1.5 |
| | ultraviolet absorber | parts by weight | 1.0 | 1.0 | 1.0 | 1.0 | 1.0 | 1.0 |
| | photostabilizer | parts by weight | 1.0 | 1.0 | 1.0 | 1.0 | 1.0 | 1.0 |
| Evaluations | initial peel strength | | ○ | ○ | ○ | ○ | ○ | ○ |
| | peel strength following heat resistance test | | ○ | ○ | ○ | ○ | ○ | ○ |
| | peel strength following weather resistance test | | ○ | ○ | ○ | ○ | ○ | ○ |

### (Example 2)

With the exception of replacing the first primer layer from the example 1 with a material comprising 50 parts by weight (50% by weight of the resin component) of a vinyl chloride-vinyl acetate copolymer resin (MKK MEDIUM, manufactured by Showa Ink Manufacturing Co., Ltd.), 50 parts by weight (50% by weight of the resin component) of a urethane acrylate oligomer (CSEB5 MEDIUM, manufactured by Showa Ink Manufacturing Co., Ltd.), and 1.5 parts by weight of a photoinitiator (IRGACURE 819, manufactured by Ciba Specialty Chemicals Inc.) per 100 parts by weight of the resin mixture, diluted with a dilution solvent to generate a solid fraction concentration of 30% by weight, a decorative sheet was produced in the same manner as the example 1. The evaluation results for this decorative sheet are shown in Table 1.

### (Example 3)

A plurality of colored inks were prepared by mixing a variety of different colored pigments with samples of a mixed binder component comprising 80 parts by weight (80% by weight of the resin component) of a vinyl chloride-vinyl acetate copolymer resin (MKK MEDIUM, manufactured by Showa Ink Manufacturing Co., Ltd., solid fraction: 25% by weight), and 20 parts by weight (20% by weight of the resin component) of an acrylic polyol based acrylic based resin (MKA MEDIUM, manufactured by Showa Ink Manufacturing Co., Ltd., solid fraction: 40% by weight), and using a multi-color gravure printer, a printed pattern was then formed on top of a releasable film of stretched polyethylene terephthalate, thus forming a decorative layer.

Subsequently, a primer material comprising 20 parts by weight (20% by weight of the resin component) of a vinyl chloride-vinyl acetate copolymer resin (MKK MEDIUM, manufactured by Showa Ink Manufacturing Co., Ltd.), 80 parts by weight (80% by weight of the resin component) of a urethane acrylate oligomer (CSEB5 MEDIUM, manufactured by Showa Ink Manufacturing Co., Ltd.), and 2.4 parts by weight of a photoinitiator (IRGACURE 819, manufactured by Ciba Specialty Chemicals Inc.) per 100 parts by weight of the resin mixture, diluted with a dilution solvent (MEK / MIBK / ethyl acetate = 50/30/20) to generate a solid fraction concentration of 35% by weight, was applied to the surface of the decorative layer using a gravure coating method, and subsequently dried, thus forming a second primer coating with a thickness of 3 µm.

Using the same method as the example 1, a solventless radiation curable coating material was then applied to the surface of the thus formed primer coating to generate a radiation cured coating layer, and a pressure sensitive adhesive layer was formed on the surface of the decorative layer, thus generating a decorative sheet. The evaluation results for this decorative sheet are shown in Table 1.

### (Example 4)

A plurality of colored inks were prepared by mixing a variety of different colored pigments with 100 parts by weight (100% by weight of the resin component) samples of a vinyl chloride-vinyl acetate copolymer resin (MKK MEDIUM, manufactured by Showa Ink Manufacturing Co., Ltd.), and using a multi-color gravure printer, a printed pattern was then formed on top of a releasable film of stretched polyethylene terephthalate, thus forming a decorative layer.

Subsequently, a first primer material comprising 70 parts by weight (70% by weight of the resin component) of a vinyl chloride-vinyl acetate copolymer resin (MKK MEDIUM, manufactured by Showa Ink Manufacturing Co., Ltd.), and 30 parts by weight (30% by weight of the resin component) of an acrylic polyol based acrylic based resin (MKA MEDIUM, manufactured by Showa Ink Manufacturing Co., Ltd., solid fraction: 40% by weight) was applied to the surface of the decorative layer using a gravure coating method, and subsequently dried, thus forming a first primer coating with a thickness of 3 µm.

Next, a second primer material comprising 50 parts by weight (50% by weight of the resin component) of a urethane acrylate oligomer (CSEB5 MEDIUM, manufactured by Showa Ink Manufacturing Co., Ltd.), 30 parts by weight (30% by weight of the resin component) of an acrylic resin acrylate (CSEB12 MEDIUM, manufactured by Showa Ink Manufacturing Co., Ltd., solid fraction concentration: 40% by weight), 20 parts by weight (20% by weight of the resin component) of an acrylic based resin (MKA MEDIUM, manufactured by Showa Ink Manufacturing Co., Ltd.), and 3.0 parts by weight of a photoinitiator (IRGACURE 819, manufactured by Ciba Specialty Chemicals Inc.) per 100 parts by weight of the resin mixture, was applied to the surface of the first primer layer using a gravure coating method, and subsequently dried, thus forming a second primer layer with a thickness of 3 µm.

Subsequently, a radiation curable coating material comprising 100 parts by weight of a solventless radiation curable coating material (KRM7842, a urethane acrylate based material manufactured by Daicel UCB Co., Ltd.), 1.5 parts by weight of each of a photoinitiator 1 (IRGACURE 184, manufactured by Ciba Specialty Chemicals Inc.) and a photoinitiator 2 (IRGACURE 819, manufactured by Ciba Specialty Chemicals Inc.), 1.0 parts by weight of a benzotriazole based ultraviolet absorber (TINUVIN 400, manufactured by Ciba Specialty Chemicals Inc.), and 1.0 parts by weight of a hindered amine based photostabilizer (TINUVIN 290, manufactured by Ciba Specialty Chemicals Inc.) was applied to the surface of the formed second primer coating using a die coating method, thus forming a radiation curable coating with a thickness of 150 µm.

The layered construction was then cured by irradiation with ultraviolet light from the side of the radiation curable coating, by passage through a nitrogen gas environment (with a residual oxygen concentration of 100 ppm) under two 120 W/cm long wavelength, high pressure mercury lamps, using a passage speed of 30 m/minute, thus forming a second primer layer and a radiation cured coating layer (surface hardness: pencil hardness F). Subsequently, the polyethylene terephthalate film was removed from the decorative layer, a pressure sensitive adhesive layer of thickness 50 µm formed on a release sheet was bonded to the decorative layer, and the resulting construction was cured for 2 days at 40 to 50°C, thus yielding a decorative sheet. The evaluation results for this decorative sheet are shown in Table 1.

### (Example 5)

With the exception of replacing the first primer layer from the example 1 with a white colored primer material comprising 40 parts by weight (40% by weight of the resin component) of an acrylic urethane resin (KA2 MEDIUM, manufactured by Showa Ink Manufacturing Co., Ltd., solid fraction concentration: 20% by weight), 30 parts by weight (30% by weight of the resin component) of an acrylic based resin (MKA MEDIUM, manufactured by Showa Ink Manufacturing Co., Ltd.), 30 parts by weight (30% by weight of the resin component) of an acrylic resin acrylate oligomer (CSEB12 MEDIUM, manufactured by Showa Ink Manufacturing Co., Ltd.), 1 part by weight of a photoinitiator (IRGACURE 819, manufactured by Ciba Specialty Chemicals Inc.) per 100 parts by weight of the resin mixture, and a white pigment, diluted with a dilution solvent to generate a solid fraction concentration of 30% by weight, a decorative sheet was produced in the same manner as the example 1. The evaluation results for this decorative sheet are shown in Table 1.

### (Example 6)

With the exceptions of preparing a plurality of colored inks by mixing a variety of different colored pigments with samples of a mixed binder component comprising 60 parts by weight (60% by weight of the resin component) of a vinyl chloride-vinyl acetate copolymer resin (MKK MEDIUM, manufactured by Showa Ink Manufacturing Co., Ltd., solid fraction: 25% by weight), and 40 parts by weight (40% by weight of the resin component) of an acrylic based resin (MKA MEDIUM, manufactured by Showa Ink Manufacturing Co., Ltd.), and then using a multi-color gravure printer to generate a printed pattern on top of a first primer layer, thus forming a decorative layer,
replacing the first primer layer with a material comprising 100 parts by weight (100% by weight of the resin component) of an acrylic urethane resin (KA2 MEDIUM, manufactured by Showa Ink Manufacturing Co., Ltd., solid fraction concentration: 20% by weight), and
replacing the second primer material with a material comprising a mixture of 30 parts by weight (30% by weight of the resin component) of an acrylic urethane resin (KA2 MEDIUM, manufactured by Showa Ink Manufacturing Co., Ltd., solid fraction concentration: 20% by weight), and 70 parts by weight (70% by weight of the resin component) of a urethane acrylate oligomer (CSEB5 MEDIUM, manufactured by Showa Ink Manufacturing Co., Ltd.), and also containing 2.1 parts by weight of a photoinitiator (IRGACURE 819, manufactured by Ciba Specialty Chemicals Inc.) per 100 parts by weight of the mixture, a decorative sheet was produced in the same manner as the example 1. The evaluation results for this decorative sheet are shown in Table 1.

### (Example 7)

With the exception of replacing the primer material from the example 3 with 100 parts by weight (100% by weight of the resin component) of an acrylic polyol based acrylic based resin (MKA MEDIUM, manufactured by Showa Ink Manufacturing Co., Ltd.), a decorative sheet was produced in the same manner as the example 3. The evaluation results for this decorative sheet are shown in Table 2.

**Table 2**

| | | | Example 7 | Example 8 | Example 9 | Comparative example 1 | Comparative example 2 | Comparative example 3 |
|---|---|---|---|---|---|---|---|---|
| Decorative layer | vinyl chloride-vinyl acetate copolymer resin | parts by weight | 80 | 100 | | 100 | 100 | 60 |
| | urethane based resin | | | | 100 | | | |
| | acrylic based resin | | 20 | | | | | |
| First primer material | (acrylic based oligomer) | parts by weight | | | | | | |
| | urethane acrylate oligomer | | | | | | 50 | 10 |
| | acrylic resin acrylate oligomer | | | | | | | |
| | photoinitiator | parts by weight | | | | | 1.5 | 2.7 |
| | (thermoplastic resin) | parts by weight | | | | | | |
| | vinyl chloride-vinyl acetate copolymer resin | | | 100 | | | 50 | 10 |
| | urethane based resin | | | | 70 | | | |
| | acrylic based resin | | | | 30 | | | |
| Second primer material | (acrylic based oligomer) | parts by weight | | | | | | |
| | urethane acrylate oligomer | | | 20 | | | 10 | 50 |
| | acrylic resin acrylate oligomer | | | | | | | 30 |
| | photoinitiator | parts by weight | | 1.0 | | | | 3.0 |
| | (thermoplastic resin) | parts by weight | | | | | | |
| | vinyl chloride-vinyl acetate copolymer resin | | | | | | 90 | |
| | acrylic based resin | | 100 | 80 | 100 | | | 20 |
| Curable coating material | KRM7818 | parts by weight | 100 | 100 | | 100 | 100 | 100 |
| | KRM7842 | parts by weight | | | 100 | | | |
| | photoinitiator 1 | parts by weight | 1.5 | 1.5 | 1.5 | 1.5 | 1.5 | 1.5 |
| | photoinitiator 2 | parts by weight | 1.5 | 1.5 | 1.5 | 1.5 | 1.5 | 1.5 |
| | ultraviolet absorber | parts by weight | 1.0 | 1.0 | 1.0 | 1.0 | 1.0 | 1.0 |
| | photostabilizer | parts by weight | 1.0 | 1.0 | 1.0 | 1.0 | 1.0 | 1.0 |
| Evaluations | initial peel strength | | ○ | ○ | ○ | Δ | ○ | Δ |
| | peel strength following heat resistance test | | ○ | ○ | ○ | × | × | × |
| | peel strength following weather resistance test | | ○ | ○ | ○ | × | Δ | × |

### (Example 8)

With the exception of replacing the second primer layer from the example 1 with a material comprising 20 parts by weight (20% by weight of the resin component) of a urethane acrylate oligomer (CSEB5 MEDIUM, manufactured by Showa Ink Manufacturing Co., Ltd.), 80 parts by weight (80% by weight of the resin component) of an acrylic polyol based acrylic based resin (MKA MEDIUM, manufactured by Showa Ink Manufacturing Co., Ltd.), and 1.0 parts by weight of a photoinitiator (IRGACURE 819, manufactured by Ciba Specialty Chemicals Inc.), diluted with a dilution solvent to generate a solid fraction concentration of 30% by weight, a decorative sheet was produced in the same manner as the example 1. The evaluation results for this decorative sheet are shown in Table 2.

### (Example 9)

Using the same method as the example 4, but with the exceptions of replacing the 100 parts by weight of the vinyl chloride-vinyl acetate copolymer resin in the decorative layer with 100 parts by weight of an acrylic urethane resin (KA2 MEDIUM, manufactured by Showa Ink Manufacturing Co., Ltd., solid fraction concentration: 20% by weight), and using 100 parts by weight of an acrylic polyol based acrylic based resin as the second primer material, a decorative sheet was produced in the same manner as the example 4. The evaluation results for this decorative sheet are shown in Table 2.

### (Comparative Example 1)

A first primer material and a second primer material were not used, but a plurality of colored inks were prepared by mixing a variety of different colored pigments with 100 parts by weight samples (100% by weight of the resin component) of a vinyl chloride-vinyl acetate copolymer resin (MKK MEDIUM, manufactured by Showa Ink Manufacturing Co., Ltd., solid fraction: 25% by weight), and using a multi-color gravure printer, a printed pattern was then formed on top of a releasable film of stretched polyethylene terephthalate, thus forming a decorative layer.

Subsequently, a radiation curable coating material comprising 100 parts by weight of a urethane acrylate oligomer (KRM7818, manufactured by Daicel UCB Co., Ltd.), 1.5 parts by weight of each of a photoinitiator 1 (IRGACURE 184, manufactured by Ciba Specialty Chemicals Inc.) and a photoinitiator 2 (IRGACURE 819, manufactured by Ciba Specialty Chemicals Inc.), 1.0 parts by weight of a benzotriazole based ultraviolet absorber (TINUVIN 400, manufactured by Ciba Specialty Chemicals Inc.), and 1.0 parts by weight of a hindered amine based photostabilizer (TINUVIN 290, manufactured by Ciba Specialty Chemicals Inc.) was applied to the surface of the decorative layer using a die coating method, thus forming a radiation curable coating with a thickness of 150 µm.

The layered construction was then cured by irradiation with ultraviolet light from the side of the radiation curable coating, by passage through a nitrogen gas environment (with a residual oxygen concentration of 100 ppm) under two 120 W/cm long wavelength, high pressure mercury lamps, using a passage speed of 30 m/minute, thus forming a radiation cured coating layer (surface hardness: pencil hardness F). Subsequently, the polyethylene terephthalate film was removed from the decorative layer, a pressure sensitive adhesive layer of thickness 50 µm formed on a release sheet was bonded to the decorative layer, and the resulting construction was cured for 2 days at 40 to 50°C, thus yielding a decorative sheet. The evaluation results for this decorative sheet are shown in Table 2.

### (Comparative Example 2)

With the exception of replacing the second primer layer from the example 2 with a material comprising 90 parts by weight (90% by weight of the resin component) of a vinyl chloride-vinyl acetate copolymer resin (MKK MEDIUM, manufactured by Showa Ink Manufacturing Co., Ltd.), and 10 parts by weight (10% by weight of the resin component) of a urethane acrylate oligomer (CSEB5 MEDIUM, manufactured by Showa Ink Manufacturing Co., Ltd.), a decorative sheet was produced in the same manner as the example 2. The evaluation results for this decorative sheet are shown in Table 2.

### (Comparative Example 3)

With the exceptions of replacing the first primer material from the example 4 with a material comprising 10 parts by weight (10% by weight of the resin component) of a vinyl chloride-vinyl acetate copolymer resin (MKK MEDIUM, manufactured by Showa Ink Manufacturing Co., Ltd.), 90 parts by weight (90% by weight of the resin component) of a urethane acrylate oligomer (CSEB5 MEDIUM, manufactured by Showa Ink Manufacturing Co., Ltd.), and 2.7 parts by weight of a photoinitiator (IRGACURE 819, manufactured by Ciba Specialty Chemicals Inc.) per 100 parts by weight of the resin mixture, diluted with a dilution solvent to generate a solid fraction concentration of 30% by weight, and using 100 parts by weight of a urethane acrylate oligomer (KRM7818, manufactured by Daicel UCB Co., Ltd.) as the radiation curable coating material KRM7842, a decorative sheet was produced in the same manner as the example 4. The evaluation results for this decorative sheet are shown in Table 2.

### (Example 10)

With the exceptions of forming the coatings of the second primer material and the solventless radiation curable coating material from the example 1 without the addition of the photoinitiator, and then curing these coatings by irradiation with an electron beam under conditions including a nitrogen gas atmosphere (with a residual oxygen concentration of 100 ppm), an absorbed dose of 7 Mrad, and a passage speed of 50 m/min., thus forming a second primer layer and a radiation cured coating layer, a decorative sheet was produced in the same manner as the example 1. The evaluation results for this decorative sheet are shown in Table 3.

**Table 3**

| | | | Example 10 | Example 11 | Example 12 | Example 13 | Comparative example 4 |
|---|---|---|---|---|---|---|---|
| Decorative layer | vinyl chloride-vinyl acetate copolymer resin | parts by weight | 100 | 100 | 80 | | 100 |
| | urethane based resin | | | | 20 | 100 | |
| | acrylic based resin | | | | | | |
| First primer material | (acrylic based oligomer) | parts by weight | | | | | |
| | urethane acrylate oligomer | | | | | | 90 |
| | acrylic resin acrylate oligomer | | | | | | |
| | (thermoplastic resin) | parts by weight | | | | | |
| | vinyl chloride-vinyl acetate copolymer resin | | 100 | 70 | | | 10 |
| | urethane based resin | | | | | 100 | |
| | acrylic based resin | | | 30 | | | |
| Second primer material | (acrylic based oligomer) | parts by weight | | | | | |
| | urethane acrylate oligomer | | 100 | 50 | | 20 | 50 |
| | acrylic resin acrylate oligomer | | | 30 | | | 30 |
| | (thermoplastic resin) | parts by weight | | | | | |
| | vinyl chloride-vinyl acetate copolymer resin | | | | | | |
| | acrylic based resin | | | 20 | 100 | 80 | 20 |
| Curable coating material | KRM7818 | parts by weight | 100 | | 100 | 100 | 100 |
| | KRM7842 | parts by weight | | 100 | | | |
| | ultraviolet absorber | parts by weight | 1.0 | 1.0 | 1.0 | 1.0 | 1.0 |
| | photostabilizer | parts by weight | 1.0 | 1.0 | 1.0 | 1.0 | 1.0 |
| Evaluations | initial peel strength | | ○ | ○ | ○ | ○ | Δ |
| | peel strength following heat resistance test | | ○ | ○ | ○ | ○ | × |
| | peel strength following weather resistance test | | ○ | ○ | ○ | ○ | × |

### (Example 11)

With the exceptions of forming the coatings of the first primer material, the second primer material, and the solventless radiation curable coating material from the example 4 without the addition of the photoinitiator, and then curing these coatings by irradiation with an electron beam under conditions including a nitrogen gas atmosphere (with a residual oxygen concentration of 100 ppm), an absorbed dose of 7 Mrad, and a passage speed of 50 m/min., thus forming a first primer layer, a second primer layer and a radiation cured coating layer, a decorative sheet was produced in the same manner as the example 4. The evaluation results for this decorative sheet are shown in Table 3.

### (Example 12)

With the exception of forming the coating of the solventless radiation curable coating material from the example 7 without the addition of the photoinitiator, and then curing this coating by irradiation with an electron beam under conditions including a nitrogen gas atmosphere (with a residual oxygen concentration of 100 ppm), an absorbed dose of 7 Mrad, and a passage speed of 50 m/min., thus forming a radiation cured coating layer, a decorative sheet was produced in the same manner as the example 7. The evaluation results for this decorative sheet are shown in Table 3.

### (Example 13)

With the exceptions of replacing the 100 parts by weight of the vinyl chloride-vinyl acetate copolymer resin used in the decorative layer and the first primer layer of the example 8 with 100 parts by weight of an acrylic urethane resin (KA2 MEDIUM, manufactured by Showa Ink Manufacturing Co., Ltd., solid fraction concentration: 20% by weight), and forming the coatings of the second primer material and the solventless radiation curable coating material from the example 8 without the addition of the photoinitiator, and then curing these coatings by irradiation with an electron beam under conditions including a nitrogen gas atmosphere (with a residual oxygen concentration of 100 ppm), an absorbed dose of 7 Mrad, and a passage speed of 50 m/min., thus forming a second primer layer and a radiation cured coating layer, a decorative sheet was produced in the same manner as the example 8. The evaluation results for this decorative sheet are shown in Table 3.

### (Comparative Example 4)

With the exceptions of forming the coatings of the first primer material, the second primer material, and the solventless radiation curable coating material from the comparative example 3 without the addition of the photoinitiator, and then curing these coatings by irradiation with an electron beam under conditions including a nitrogen gas atmosphere (with a residual oxygen concentration of 100 ppm), an absorbed dose of 7 Mrad, and a passage speed of 50 m/min., thus forming a first primer layer, a second primer layer and a radiation cured coating layer, a decorative sheet was produced in the same manner as the comparative example 3. The evaluation results for this decorative sheet are shown in Table 3.

In the examples 1, 2, 5, 6, 8, 10 and 13, the first primer layer that contacts the pressure sensitive adhesive layer comprised at least 25% by weight of a thermoplastic resin containing at least one of a vinyl chloride-vinyl acetate copolymer resin and a acrylic polyol based acrylic based resin, while the second primer layer comprised at least 25% by weight of either a cured product of a radiation curable resin formed from an acrylic based oligomer, or an acrylic polyol based acrylic based resin, and consequently each of the decorative sheets displayed excellent adhesion, which prevented peeling of the decorative sheet between layers thereof even after heat resistance testing or weather resistance testing.

Furthermore, in the examples 3, 4, 7, 9, 11 and 12, the decorative layer that contacts the pressure sensitive adhesive layer comprised at least 25% by weight of a thermoplastic resin containing at least one of a vinyl chloride-vinyl acetate copolymer resin and a acrylic polyol based acrylic based resin, while the second primer layer comprised at least 25% by weight of either a cured product of a radiation curable resin formed from an acrylic based oligomer, or an acrylic polyol based acrylic based resin, and consequently each of the decorative sheets displayed excellent adhesion, which prevented peeling of the decorative sheet between layers thereof even after heat resistance testing or weather resistance testing.

In the comparative example 1, the decorative sheet contained neither a first primer layer nor a second primer layer, and consequently the initial peel strength, and the peel strength values following heat resistance testing and weather resistance testing, were inferior.

In the comparative example 2, the second primer layer did not contain 25% or more by weight of a cured product of a radiation curable resin formed from an acrylic based oligomer, and consequently although the initial peel strength was high, the peel strength values following heat resistance testing and weather resistance testing were inferior.

In the comparative examples 3 and 4, the first primer layer that contacts the pressure sensitive adhesive layer did not contain 25% or more by weight of a thermoplastic resin containing at least one of a vinyl chloride-vinyl acetate copolymer resin, an acrylic based resin and a urethane based resin, and consequently the initial peel strength, and the peel strength values following heat resistance testing and weather resistance testing, were inferior.

### (Example 14)

A first primer material solution comprising 100 parts by weight (100% by weight of the resin component) of a vinyl chloride-vinyl acetate copolymer resin (MKK MEDIUM, manufactured by Showa Ink Manufacturing Co., Ltd., solid fraction: 25% by weight) was applied to a releasable film of stretched polyethylene terephthalate using a gravure coating method, and was then dried to form a first primer layer of thickness 2 µm.

Subsequently, a second primer material solution comprising 100 parts by weight (100% by weight of the resin component) of a urethane acrylate oligomer (CSEB5 MEDIUM, manufactured by Showa Ink Manufacturing Co., Ltd., solid fraction: 40% by weight), and 3.0 parts by weight of a photoinitiator (IRGACURE 819, manufactured by Ciba Specialty Chemicals Inc., bis(2,4,6-trimethylbenzoyl)-phenylphosphine oxide), diluted to a solid fraction concentration of 35% by weight using a dilution solvent (MEK / MIBK / ethyl acetate = 50/30/20), was applied to the surface of the first primer layer using a gravure coating method, and was then dried to form a second primer coating with a thickness of 3 µm.

Subsequently, a coating material comprising 100 parts by weight of a solventless radiation curable coating material (KRM7818, a urethane acrylate based material manufactured by Daicel UCB Co., Ltd.), 1.5 parts by weight of each of a photoinitiator 1 (IRGACURE 184, manufactured by Ciba Specialty Chemicals Inc.) and a photoinitiator 2 (IRGACURE 819, manufactured by Ciba Specialty Chemicals Inc.), 1.0 parts by weight of a benzotriazole based ultraviolet absorber (TINUVIN 400, manufactured by Ciba Specialty Chemicals Inc.), and 1.0 parts by weight of a hindered amine based photostabilizer (TINUVIN 290, manufactured by Ciba Specialty Chemicals Inc.) was applied to the surface of the formed second primer coating using a die coating method, thus forming a radiation curable coating with a thickness of 200 µm.

The layered construction was then cured by irradiation with ultraviolet light from the side of the radiation curable coating, by passage through a nitrogen gas environment (with a residual oxygen concentration of 100 ppm) under two 120 W/cm long wavelength, high pressure mercury lamps, using a passage speed of 30 m/minute, thus forming a second primer layer and a radiation cured coating layer (surface hardness: pencil hardness F). Subsequently, the polyethylene terephthalate film was removed from the first primer layer, a pressure sensitive adhesive layer (RIKIDYNE AR-2120, manufactured by VIGteQnos Co., Ltd.) of thickness 40 µm formed on a release sheet was bonded to the first primer layer, and the resulting construction was cured for 2 days at 40 to 50°C, thus yielding a decorative sheet for exterior facings.

The thus produced exterior decorative sheet was evaluated using the tests described in the example 1. The results are shown in Table 4.

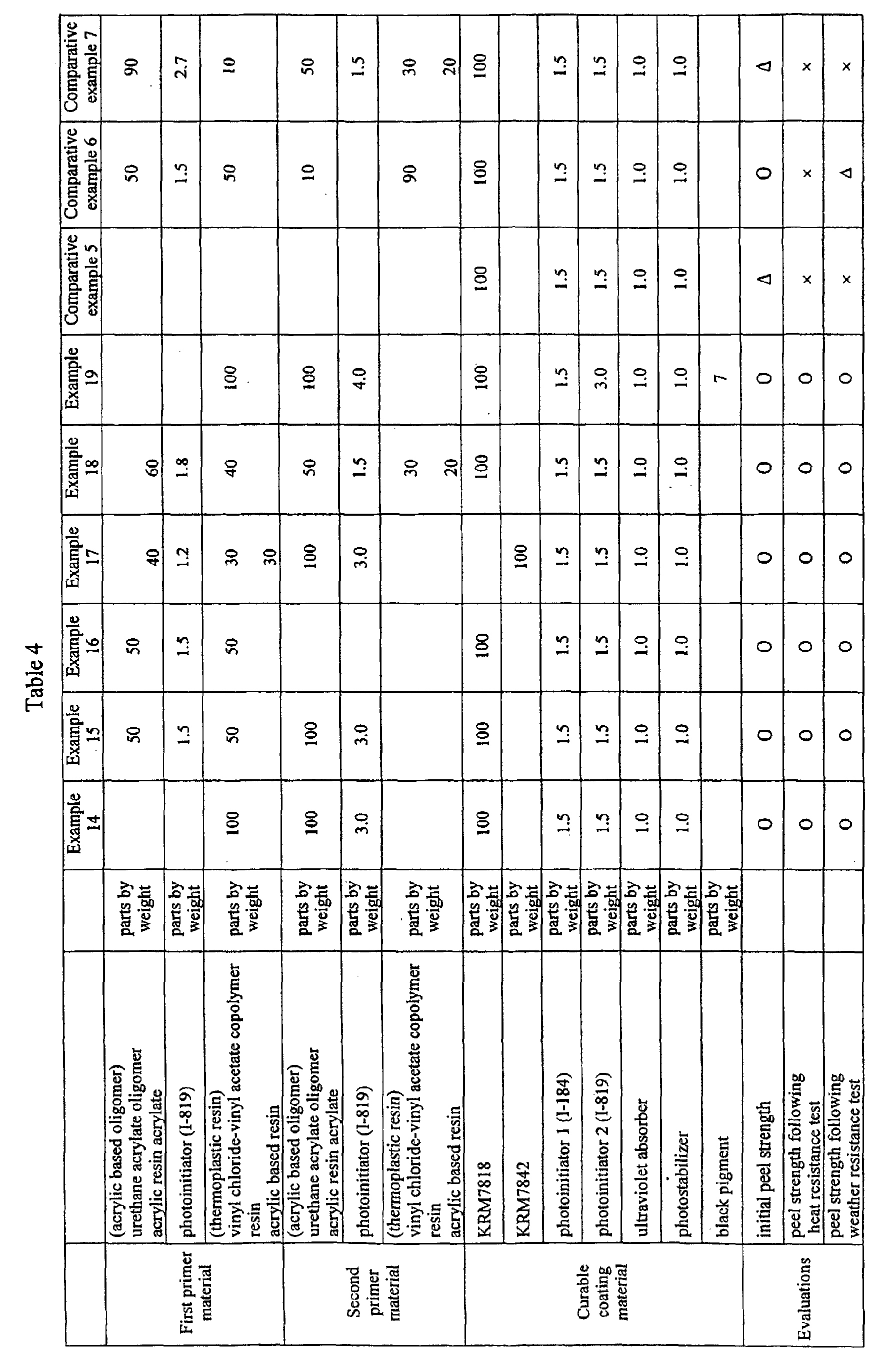

### (Example 15)

With the exception of replacing the first primer material from the example 14 with a primer material solution comprising 50 parts by weight (50% by weight of the resin component) of a vinyl chloride-vinyl acetate copolymer resin (MKK MEDIUM, manufactured by Showa Ink Manufacturing Co., Ltd., solid fraction concentration: 25% by weight), 50 parts by weight (50% by weight of the resin component) of a urethane acrylate oligomer (CSEB5 MEDIUM, manufactured by Showa Ink Manufacturing Co., Ltd., solid fraction concentration: 40% by weight), and 1.5 parts by weight of a photoinitiator (IRGACURE 819, manufactured by Ciba Specialty Chemicals Inc.) per 100 parts by weight of the resin mixture, diluted with a dilution solvent to generate a solid fraction concentration of 30% by weight, an exterior decorative sheet was produced in the same manner as the example 14. The evaluation results for this exterior decorative sheet are shown in Table 4.

### (Example 16)

With the exception of omitting the second primer material solution from the example 15, an exterior decorative sheet was produced in the same manner as the example 15. The evaluation results for this exterior decorative sheet are shown in Table 4.

### (Example 17)

With the exceptions of replacing the first primer material from the example 14 with a primer material solution comprising 30 parts by weight (30% by weight of the resin component) of a vinyl chloride-vinyl acetate copolymer resin (MKK MEDIUM, manufactured by Showa Ink Manufacturing Co., Ltd.), 30 parts by weight (30% by weight of the resin component) of an acrylic based resin (MKA MEDIUM, manufactured by Showa Ink Manufacturing Co., Ltd., solid fraction: 40% by weight), 40 parts by weight (40% by weight of the resin component) of an acrylic resin acrylate (CSEB12 MEDIUM, manufactured by Showa Ink Manufacturing Co., Ltd., solid fraction: 40% by weight), and 1.2 parts by weight of a photoinitiator (IRGACURE 819, manufactured by Ciba Specialty Chemicals Inc.) per 100 parts by weight of the resin mixture, diluted with a dilution solvent to generate a solid fraction concentration of 30% by weight, and replacing the KRM7818 (manufactured by Daicel UCB Co., Ltd.) radiation curable coating material from the example 14 with KRM7842 (a urethane acrylate based material, manufactured by Daicel UCB Co., Ltd.), an exterior decorative sheet was produced in the same manner as the example 14. The surface hardness of the radiation cured coating layer of this sheet was pencil hardness F. The evaluation results for this exterior decorative sheet are shown in Table 4.

### (Example 18)

With the exceptions of replacing the first primer material from the example 14 with a primer material solution comprising 40 parts by weight (40% by weight of the resin component) of a vinyl chloride-vinyl acetate copolymer resin (MKK MEDIUM, manufactured by Showa Ink Manufacturing Co., Ltd.), 60 parts by weight (60% by weight of the resin component) of an acrylic resin acrylate (CSEB12 MEDIUM, manufactured by Showa Ink Manufacturing Co., Ltd.), and 1.8 parts by weight of a photoinitiator (IRGACURE 819, manufactured by Ciba Specialty Chemicals Inc.) per 100 parts by weight of the resin mixture, diluted with a dilution solvent to generate a solid fraction concentration of 30% by weight, and replacing the second primer material from the example 14 with a primer material solution comprising 30 parts by weight (30% by weight of the resin component) of a vinyl chloride-vinyl acetate copolymer resin (MKK MEDIUM, manufactured by Showa Ink Manufacturing Co., Ltd.), 20 parts by weight (20% by weight of the resin component) of an acrylic based resin (MKA MEDIUM, manufactured by Showa Ink Manufacturing Co., Ltd.), 50 parts by weight (50% by weight of the resin component) of a urethane acrylate oligomer (CSEB5 MEDIUM, manufactured by Showa Ink Manufacturing Co., Ltd.), and 1.5 parts by weight of a photoinitiator (IRGACURE 819, manufactured by Ciba Specialty Chemicals Inc.) per 100 parts by weight of the resin mixture, diluted with a dilution solvent to generate a solid fraction concentration of 35% by weight, an exterior decorative sheet was produced in the same manner as the example 14. The evaluation results for this exterior decorative sheet are shown in Table 4.

### (Example 19)

With the exceptions of increasing the quantity of the photoinitiator (IRGACURE 819, manufactured by Ciba Specialty Chemicals Inc.) within the second primer layer in the example 14 to 4.0 parts by weight, and using a radiation curable coating material comprising 100 parts by weight of KRM7818 (a urethane acrylate based material manufactured by Daicel UCB Co., Ltd.), 7 parts by weight of a black pigment (#350, manufactured by Degussa AG), 1.5 parts by weight of a photoinitiator 1 (IRGACURE 184, manufactured by Ciba Specialty Chemicals Inc.), 3.0 parts by weight of a photoinitiator 2 (IRGACURE 819, manufactured by Ciba Specialty Chemicals Inc.), 1.0 parts by weight of a benzotriazole based ultraviolet absorber (TINUVIN 400, manufactured by Ciba Specialty Chemicals Inc.), and 1.0 parts by weight of a hindered amine based photostabilizer (TINUVIN 290, manufactured by Ciba Specialty Chemicals Inc.), to form a coating with a thickness of 100 µm, a black exterior decorative sheet was produced in the same manner as the example 14. The evaluation results for this exterior decorative sheet are shown in Table 4.

### (Comparative Example 5)

A first primer material solution and a second primer material solution were not used, and a coating material comprising 100 parts by weight of a solventless radiation curable coating material (KRM7818, a urethane acrylate oligomer, manufactured by Daicel UCB Co., Ltd.), 1.5 parts by weight of each of a photoinitiator 1 (IRGACURE 184, manufactured by Ciba Specialty Chemicals Inc.) and a photoinitiator 2 (IRGACURE 819, manufactured by Ciba Specialty Chemicals Inc.), 1.0 parts by weight of a benzotriazole based ultraviolet absorber (TINUVIN 400, manufactured by Ciba Specialty Chemicals Inc.), and 1.0 parts by weight of a hindered amine based photostabilizer (TINUVIN 290, manufactured by Ciba Specialty Chemicals Inc.) was applied directly to the surface of a releasable film of stretched polyethylene terephthalate, thus forming a coating of thickness 200 µm. The applied radiation curable coating material was then cured by irradiation with ultraviolet light by passage through a nitrogen gas environment (with a residual oxygen concentration of 100 ppm) under two 120 W/cm long wavelength, high pressure mercury lamps, using a passage speed of 30 m/minute, thus forming a radiation cured coating layer. Subsequently, a pressure sensitive adhesive layer formed on a release sheet was bonded to the coating layer, and the resulting construction was cured for 2 days at 40 to 50°C, thus yielding an exterior decorative sheet. The evaluation results for this exterior decorative sheet are shown in Table 4.

### (Comparative Example 6)

With the exception of replacing the second primer material solution from the example 15 with a primer material solution comprising 90 parts by weight (90% by weight of the resin component) of a vinyl chloride-vinyl acetate copolymer resin (MKK MEDIUM, manufactured by Showa Ink Manufacturing Co., Ltd.), and 10 parts by weight (10% by weight of the resin component) of a urethane acrylate oligomer (CSEB5 MEDIUM, manufactured by Showa Ink Manufacturing Co., Ltd.), an exterior decorative sheet was produced in the same manner as the example 15. The evaluation results for this exterior decorative sheet are shown in Table 4.

### (Comparative example 7)

With the exception of replacing the first primer material from the example 18 with a primer material solution comprising 90 parts by weight (90% by weight of the resin component) of a urethane acrylate oligomer (CSEB5 MEDIUM, manufactured by Showa Ink Manufacturing Co., Ltd.), 10 parts by weight (10% by weight of the resin component) of a vinyl chloride-vinyl acetate copolymer resin (MKK MEDIUM, manufactured by Showa Ink Manufacturing Co., Ltd.), and 2.7 parts by weight of a photoinitiator (IRGACURE 819, manufactured by Ciba Specialty Chemicals Inc.), diluted with a dilution solvent to generate a solid fraction concentration of 30% by weight, an exterior decorative sheet was produced in the same manner as the example 18. The evaluation results for this exterior decorative sheet are shown in Table 4.

In the examples 14 to 19, the first primer layer comprised a vinyl chloride-vinyl acetate copolymer thermoplastic resin, and the second primer layer comprised a radiation curable resin containing either a urethane acrylate oligomer or an acrylic resin acrylate, and consequently the decorative sheets displayed excellent initial peel strength between the various layers, as well as excellent peel strength following heat resistance testing and weather resistance testing. Furthermore, in heat resistance tests conducted for 48 hours at 80°C, the exterior decorative sheets from the above examples displayed a heat shrinkage factor of less than 0.2%, and because the radiation curable coating material KRM7818 displays excellent flexibility, the black exterior decorative sheet of the example 19 is very useful as a decorative sheet for automobile sashes.

In contrast, the comparative example 5 contained no primer layers, and consequently the peel strength between the pressure sensitive adhesive layer and the radiation cured coating layer was poor from the outset.

Furthermore, in the comparative example 6, because the quantity of the cured product of the radiation curable resin containing the acrylic based oligomer within the second primer layer was low, the second primer layer and the radiation cured coating layer peeled apart in the heat resistance test.

In addition, in the comparative example 7, because the quantity of the thermoplastic resin within the first primer layer that contacts the pressure sensitive adhesive layer was low, the peel strength between the pressure sensitive adhesive layer and the first primer layer was poor.

### (Example 20)

A first primer material solution comprising 100 parts by weight (100% by weight of the resin component) of an acrylic urethane resin (KA2 MEDIUM; manufactured by Showa Ink Manufacturing Co., Ltd., solid fraction concentration: 20% by weight); was applied to a releasable film of stretched polyethylene terephthalate using a gravure coating method, and was then dried to form a first primer layer of thickness 2 µm.

Subsequently, a second primer material solution comprising 100 parts by weight (100% by weight of the resin component) of a urethane acrylate oligomer (CSEB5 MEDIUM, manufactured by Showa Ink Manufacturing Co., Ltd.) diluted to a solid fraction concentration of 35% by weight using a dilution solvent was applied to the surface of the first primer layer using a gravure coating method, and was then dried to form a second primer coating with a thickness of 3 µm.

Subsequently, a coating material comprising 100 parts by weight of a solventless urethane acrylate oligomer based radiation curable coating material (KRM7818, manufactured by Daicel UCB Co., Ltd.), 1.0 parts by weight of a benzotriazole based ultraviolet absorber (TINUVIN 400, manufactured by Ciba Specialty Chemicals Inc.), and 1.0 parts by weight of a hindered amine based photostabilizer (TINUVIN 290, manufactured by Ciba Specialty Chemicals Inc.) was applied to the surface of the formed second primer coating using a die coating method, thus forming a coating with a thickness of 200 µm.

The layered construction was then cured by irradiation with an electron beam from the side of the radiation curable coating, under conditions including a nitrogen gas atmosphere (with a residual oxygen concentration of 100 ppm), an absorbed dose of 7 Mrad, and a passage speed of 50 m/min., thus forming a second primer layer and a radiation cured coating layer (surface hardness: pencil hardness F). Subsequently, the polyethylene terephthalate film was removed from the first primer layer, a pressure sensitive adhesive layer (RIKIDYNE AR-2120, manufactured by VIGteQnos Co., Ltd.) of thickness 50 µm formed on a release sheet was bonded to the first primer layer, and the resulting construction was cured for 2 days at 40 to 50°C, thus yielding a decorative sheet for exterior facings.

The thus produced exterior decorative sheet was evaluated using the tests described below. The results are shown in Table 5.

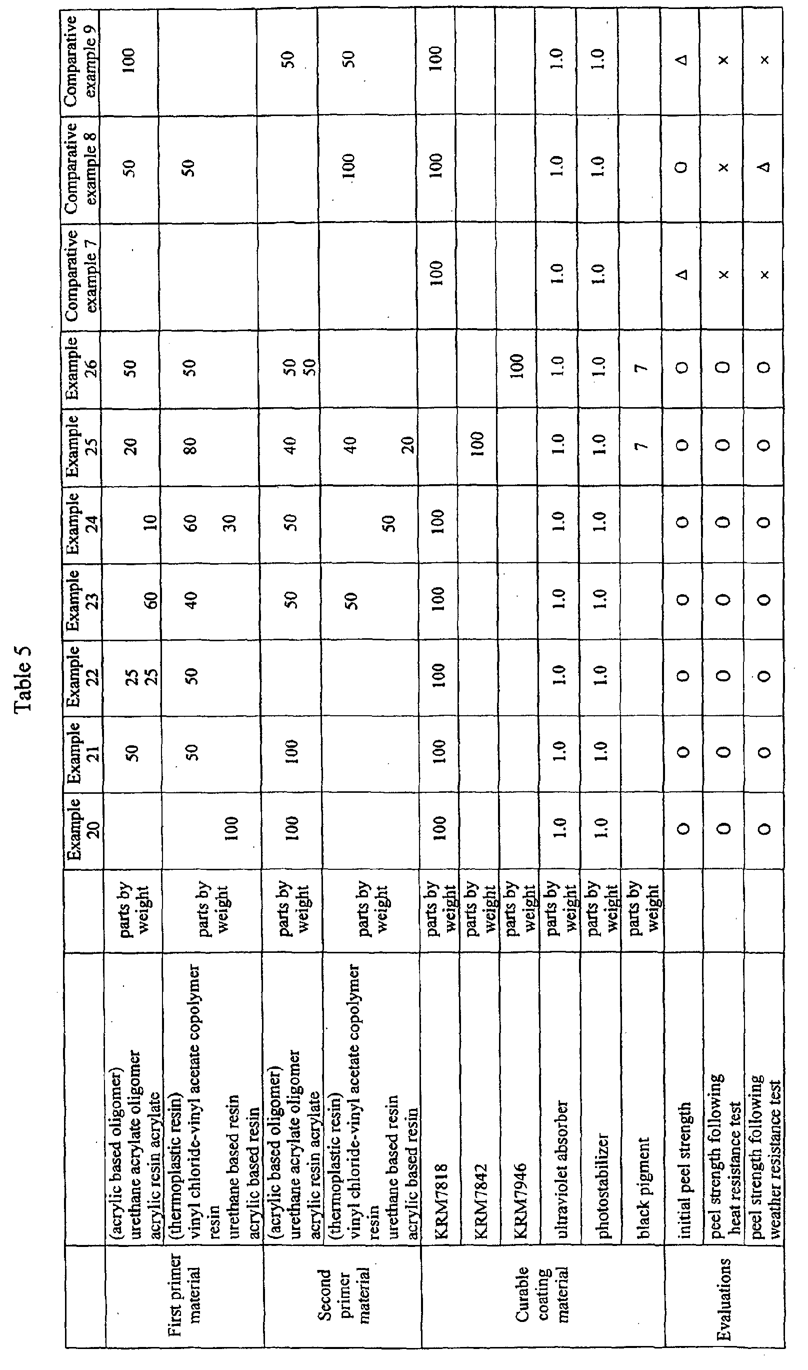

### (Example 21)

With the exception of replacing the first primer material from the example 20 with a primer material solution comprising 50 parts by weight (50% by weight of the resin component) of a vinyl chloride-vinyl acetate copolymer resin (MKK MEDIUM, manufactured by Showa Ink Manufacturing Co., Ltd.), and 50 parts by weight (50% by weight of the resin component) of a urethane acrylate oligomer (CSEB5 MEDIUM, manufactured by Showa Ink Manufacturing Co., Ltd.), diluted with a dilution solvent to generate a solid fraction concentration of 30% by weight, an exterior decorative sheet was produced in the same manner as the example 20. The evaluation results for this exterior decorative sheet are shown in Table 5.

### (Example 22)

With the exceptions of replacing the first primer material from the example 20 with a primer material solution comprising 50 parts by weight (50% by weight of the resin component) of a vinyl chloride-vinyl acetate copolymer resin (MKK MEDIUM, manufactured by Showa Ink Manufacturing Co., Ltd.), 25 parts by weight (25% by weight of the resin component) of a urethane acrylate oligomer (CSEB5 MEDIUM, manufactured by Showa Ink Manufacturing Co., Ltd.), and 25 parts by weight (25% by weight of the resin component) of an acrylic resin acrylate (CSEB12 MEDIUM, manufactured by Showa Ink Manufacturing Co., Ltd.), diluted with a dilution solvent to generate a solid fraction concentration of 30% by weight, and omitting the second primer material solution, an exterior decorative sheet was produced in the same manner as the example 20. The evaluation results for this exterior decorative sheet are shown in Table 5.

### (Example 23)

With the exceptions of replacing the first primer material from the example 20 with a primer material solution comprising 40 parts by weight (40% by weight of the resin component) of a vinyl chloride-vinyl acetate copolymer resin (MKK MEDIUM, manufactured by Showa Ink Manufacturing Co., Ltd.), and 60 parts by weight (60% by weight of the resin component) of an acrylic resin acrylate (CSEB12 MEDIUM, manufactured by Showa Ink Manufacturing Co., Ltd.), diluted with a dilution solvent to generate a solid fraction concentration of 30% by weight, and replacing the second primer material from the example 20 with a primer material solution comprising 50 parts by weight (50% by weight of the resin component) of a vinyl chloride-vinyl acetate copolymer resin (MKK MEDIUM, manufactured by Showa Ink Manufacturing Co., Ltd.), and 50 parts by weight (50% by weight of the resin component) of a urethane acrylate oligomer (CSEB5 MEDIUM, manufactured by Showa Ink Manufacturing Co., Ltd.), an exterior decorative sheet was produced in the same manner as the example 20. The evaluation results for this exterior decorative sheet are shown in Table 5.

### (Example 24)

With the exceptions of replacing the first primer material from the example 23 with a primer material solution comprising 60 parts by weight (60% by weight of the resin component) of a vinyl chloride-vinyl acetate copolymer resin (MKK MEDIUM, manufactured by Showa Ink Manufacturing Co., Ltd.), 30 parts by weight (30% by weight of the resin component) of an acrylic based resin (MKA MEDIUM, manufactured by Showa Ink Manufacturing Co., Ltd.), and 10 parts by weight (10% by weight of the resin component) of an acrylic resin acrylate (CSEB 12 MEDIUM, manufactured by Showa Ink Manufacturing Co., Ltd.), diluted with a dilution solvent to generate a solid fraction concentration of 30% by weight, and replacing the 50 parts by weight of the vinyl chloride-vinyl acetate copolymer resin within the second primer material with 50 parts by weight of an acrylic urethane resin (KA2 MEDIUM, manufactured by Showa Ink Manufacturing Co., Ltd., solid fraction concentration: 20% by weight), an exterior decorative sheet was produced in the same manner as the example 23. The evaluation results for this exterior decorative sheet are shown in Table 5.

### (Example 25)

A first primer material solution comprising 80 parts by weight (80% by weight of the resin component) of a vinyl chloride-vinyl acetate copolymer resin (MKK MEDIUM, manufactured by Showa Ink Manufacturing Co., Ltd.), and 20 parts by weight (20% by weight of the resin component) of a urethane acrylate oligomer (CSEB5 MEDIUM, manufactured by Showa Ink Manufacturing Co., Ltd.), was applied to a releasable film of stretched polyethylene terephthalate using a gravure coating method, and was then dried to form a first primer coating of thickness 2 µm.

Subsequently, a second primer material solution comprising 40 parts by weight (40% by weight of the resin component) of a urethane acrylate oligomer (CSEB5 MEDIUM, manufactured by Showa Ink Manufacturing Co., Ltd.), 40 parts by weight (40% by weight of the resin component) of a vinyl chloride-vinyl acetate copolymer resin (MKK MEDIUM, manufactured by Showa Ink Manufacturing Co., Ltd.), and 20 parts by weight (20% by weight of the resin component) of an acrylic based resin (MKA MEDIUM, manufactured by Showa Ink Manufacturing Co., Ltd.) was applied to the surface of the first primer coating using a gravure coating method, and was then dried to form a second primer coating with a thickness of 3 µm.

Subsequently, a coating material comprising 100 parts by weight of a solventless radiation curable coating material (KRM7842, a urethane acrylate based material, manufactured by Daicel UCB Co., Ltd.), 1.0 parts by weight of a benzotriazole based ultraviolet absorber (TINUVIN 400, manufactured by Ciba Specialty Chemicals Inc.), 1.0 parts by weight of a hindered amine based photostabilizer (TINUVIN 290, manufactured by Ciba Specialty Chemicals Inc.), and 7 parts by weight of a black pigment was applied to the surface of the formed second primer coating using a die coating method, thus forming a coating with a thickness of 150 µm.

The layered construction was then cured by irradiation with an electron beam from the side of the radiation curable coating, under conditions including a nitrogen gas atmosphere (with a residual oxygen concentration of 100 ppm), an absorbed dose of 7 Mrad, and a passage speed of 50 m/min., thus forming a first primer layer, a second primer layer and a radiation cured coating layer (surface hardness: pencil hardness H). Subsequently, the polyethylene terephthalate film was removed from the first primer layer, a pressure sensitive adhesive layer (RIKIDYNE AR-2120, manufactured by VIGteQnos Co., Ltd.) of thickness 40 µm formed on a release sheet was bonded to the first primer layer, and the resulting construction was cured for 2 days at 40 to 50°C, thus yielding a decorative sheet for exterior facings.

The thus produced exterior decorative sheet was evaluated using the tests described below. The results are shown in Table 5.

### (Example 26)

A first primer material solution comprising 50 parts by weight (50% by weight of the resin component) of a vinyl chloride-vinyl acetate copolymer resin (MKK MEDIUM, manufactured by Showa Ink Manufacturing Co., Ltd.), and 50 parts by weight (50% by weight of the resin component) of a urethane acrylate oligomer (CSEB5 MEDIUM, manufactured by Showa Ink Manufacturing Co., Ltd.), diluted with a dilution solvent to generate a solid fraction concentration of 30% by weight, was applied to a releasable film of stretched polyethylene terephthalate using a gravure coating method, and was then dried to form a first primer coating of thickness 2 µm.

Subsequently, a second primer material solution comprising 50 parts by weight (50% by weight of the resin component) of a urethane acrylate oligomer (CSEB5 MEDIUM, manufactured by Showa Ink Manufacturing Co., Ltd.), and 50 parts by weight (50% by weight of the resin component) of an acrylic resin acrylate (CSEB12 MEDIUM, manufactured by Showa Ink Manufacturing Co., Ltd.), diluted with a dilution solvent to generate a solid fraction concentration of 35% by weight, was applied to the surface of the first primer coating using a gravure coating method, and was then dried to form a second primer coating with a thickness of 3 µm.

Subsequently, a coating material comprising 100 parts by weight of a solventless radiation curable coating material (KRM7946, a urethane acrylate based material, manufactured by Daicel UCB Co., Ltd.), 1.0 parts by weight of a benzotriazole based ultraviolet absorber (TINUVIN 400, manufactured by Ciba Specialty Chemicals Inc.), 1.0 parts by weight of a hindered amine based photostabilizer (TINUVIN 290, manufactured by Ciba Specialty Chemicals Inc.), and 7 parts by weight of a black pigment was applied to the surface of the formed second primer coating using a die coating method, thus forming a coating with a thickness of 200 µm.

The layered construction was then cured by irradiation with an electron beam from the side of the radiation curable coating, under conditions including a nitrogen gas atmosphere (with a residual oxygen concentration of 100 ppm), an absorbed dose of 7 Mrad, and a passage speed of 50 m/min., thus forming a first primer layer, a second primer layer and a radiation cured coating layer (surface hardness: pencil hardness F). Subsequently, the polyethylene terephthalate film was removed from the first primer layer, a pressure sensitive adhesive layer (RIKIDYNE AR-2120, manufactured by VIGteQnos Co., Ltd.) of thickness 40 µm formed on a release sheet was bonded to the first primer layer, and the resulting construction was cured for 2 days at 40 to 50°C, thus yielding a decorative sheet for exterior facings.

The thus produced exterior decorative sheet was evaluated using the tests described below. The results are shown in Table 5.

### (Comparative Example 8)

A first primer material solution and a second primer material solution were not used, and a curable coating material comprising 100 parts by weight of a solventless radiation curable coating material (KRM7818, a urethane acrylate based material, manufactured by Daicel UCB Co., Ltd.), 1.0 parts by weight of a benzotriazole based ultraviolet absorber (TINUVIN 400, manufactured by Ciba Specialty Chemicals Inc.), and 1.0 parts by weight of a hindered amine based photostabilizer (TINUVIN 290, manufactured by Ciba Specialty Chemicals Inc.) was applied directly to the surface of a releasable film of stretched polyethylene terephthalate. The applied radiation curable coating material was then cured by irradiation with an electron beam under conditions including a nitrogen gas atmosphere (with a residual oxygen concentration of 100 ppm), an absorbed dose of 7 Mrad, and a passage speed of 50 m/min., thus forming a radiation cured coating layer. Subsequently, a pressure sensitive adhesive layer formed on a release sheet was bonded to the coating layer, and the resulting construction was cured for 2 days at 40 to 50°C, thus yielding an exterior decorative sheet. The evaluation results for this exterior decorative sheet are shown in Table 5.

### (Comparative Example 9)

With the exception of replacing the second primer material solution from the example 21 with 100 parts by weight (100% by weight of the resin component) of a vinyl chloride-vinyl acetate copolymer resin (MKK MEDIUM, manufactured by Showa Ink Manufacturing Co., Ltd.), an exterior decorative sheet was produced in the same manner as the example 21. The evaluation results for this exterior decorative sheet are shown in Table 5.

### (Comparative example 10)

With the exception of replacing the first primer material from the example 23 with 100 parts by weight (100% by weight of the resin component) of a urethane acrylate oligomer (CSEB5 MEDIUM, manufactured by Showa Ink Manufacturing Co., Ltd.), an exterior decorative sheet was produced in the same manner as the example 23. The evaluation results for this exterior decorative sheet are shown in Table 5.

In the examples 20 to 26, the first primer layer comprised a thermoplastic resin containing either a vinyl chloride-vinyl acetate copolymer or an acrylic based resin, and the second primer layer comprised a cured product of a radiation curable resin, and consequently the decorative sheets displayed excellent initial peel strength between the various layers, as well as excellent peel strength following heat resistance testing and weather resistance testing. Furthermore, in heat resistance tests conducted for 48 hours at 80°C, the exterior decorative sheets from the above examples satisfied the standard of a heat shrinkage factor of less than 0.2%, and are consequently very useful as exterior decorative sheets for use in automobiles.

In contrast, the comparative example 8 contained no primer layers, and consequently the peel strength between the pressure sensitive adhesive layer and the radiation cured coating layer was poor from the outset.

Furthermore, in the comparative example 9, because the second primer layer contained no cured product of the radiation curable resin, the second primer layer and the radiation cured coating layer peeled apart in the heat resistance test.

In addition, in the comparative example 10, because the first primer layer that contacts the pressure sensitive adhesive layer contained no thermoplastic resin, the peel strength between the pressure sensitive adhesive layer and the first primer layer was poor.

### (Example 27)

A first primer material solution comprising 100 parts by weight (100% by weight of the resin component) of a vinyl chloride-vinyl acetate copolymer resin (MKK MEDIUM, manufactured by Showa Ink Manufacturing Co., Ltd.) was applied to a releasable film of stretched polyethylene terephthalate using a gravure coating method, and was then dried to form a first primer layer of thickness 2 µm.

Subsequently, a second primer material solution comprising 100 parts by weight (100% by weight of the resin component) of a urethane acrylate oligomer (CSEB5 MEDIUM, manufactured by Showa Ink Manufacturing Co., Ltd.), diluted with a dilution solvent to generate a solid fraction concentration of 35% by weight, was applied to the surface of the first primer layer using a gravure coating method, and was then dried to form a second primer coating with a thickness of 3 µm.

Subsequently, a first radiation curable coating material comprising 100 parts by weight of a solventless radiation curable coating material (KRM7818, a urethane acrylate based material, manufactured by Daicel UCB Co., Ltd.), 1.0 parts by weight of a benzotriazole based ultraviolet absorber (TINUVIN 400, manufactured by Ciba Specialty Chemicals Inc.), 1.0 parts by weight of a hindered amine based photostabilizer (TINUVIN 290, manufactured by Ciba Specialty Chemicals Inc.), and 7 parts by weight of a black pigment (#350, manufactured by Degussa AG), as well as a second radiation curable coating material comprising 100 parts by weight of a solventless radiation curable coating material (KRM7818, manufactured by Daicel UCB Co., Ltd.), 1.0 parts by weight of a benzotriazole based ultraviolet absorber (TINUVIN 400, manufactured by Ciba Specialty Chemicals Inc.), and 1.0 parts by weight of a hindered amine based photostabilizer (TINUVIN 290, manufactured by Ciba Specialty Chemicals Inc.) were prepared, and a two layer die coating method was used to apply a layer of the first radiation curable coating material of thickness 100 µm to the surface of the second primer coating, followed by a layer of the second radiation curable coating material of thickness 100 µm.

The layered construction was then cured by irradiation with an electron beam from the side of the second radiation curable coating, under conditions including a nitrogen gas atmosphere (with a residual oxygen concentration of 100 ppm), an absorbed dose of 7 Mrad, and a passage speed of 50 m/min., thus forming a second primer layer, a first cured coating layer and a second cured coating layer (surface hardness: pencil hardness F). Subsequently, the polyethylene terephthalate film was removed from the first primer layer, a pressure sensitive adhesive layer (RIKIDYNE AR-2120, manufactured by VIGteQnos Co., Ltd.) of thickness 40 µm formed on a release sheet was bonded to the first primer layer, and the resulting construction was cured for 2 days at 40 to 50°C, thus yielding a decorative sheet for exterior facings.

The thus produced exterior decorative sheet was evaluated. The results are shown in Table 6.

**Table 6**

| | | | Example 27 | Example 28 | Example 29 | Example 30 |
|---|---|---|---|---|---|---|
| First primer material | (acrylic based oligomer) | parts by weight | | | | |
| | urethane acrylate oligomer | | | | | |
| | acrylic resin acrylate oligomer | | | 40 | 30 | |
| | (thermoplastic resin) | parts by weight | | | | |
| | vinyl chloride-vinyl acetate copolymer resin | | 100 | | 50 | 50 |
| | urethane based resin | | | 60 | | |
| | acrylic based resin | | | | 20 | 50 |
| Second primer material | (acrylic based oligomer) | parts by weight | | | | |
| | urethane acrylate oligomer | | 100 | 60 | 50 | 50 |
| | acrylic resin acrylate oligomer | | | | 50 | |
| | (thermoplastic resin) | parts by weight | | | | |
| | vinyl chloride-vinyl acetate copolymer resin | | | | | 30 |
| | urethane based resin | | | 40 | | |
| | acrylic based resin | | | | | 20 |
| First curable coating material | KRM7818 | parts by weight | 100 | 100 | 100 | 100 |
| | ultraviolet absorber | parts by weight | 1.0 | 1.0 | 1.0 | 1.0 |
| | photostabilizer | parts by weight | 1.0 | 1.0 | 1.0 | 1.0 |
| | metallic pigment | parts by weight | | 3 | 3 | 3 |
| | blue pigment | parts by weight | | 5 | 5 | |
| | black pigment | parts by weight | 7 | | | 5 |
| Second curable coating material | KRM7818 | parts by weight | 100 | | | |
| | KRM7842 | parts by weight | | 100 | | 100 |
| | KRM7946 | parts by weight | | | 100 | |
| | ultraviolet absorber | parts by weight | 1.0 | 1.0 | 1.0 | 1.0 |
| | photostabilizer | parts by weight | 1.0 | 1.0 | 1.0 | 1.0 |
| Evaluations | initial peel strength | | ○ | ○ | ○ | ○ |
| | peel strength following heat resistance test | | ○ | ○ | ○ | ○ |
| | peel strength following weather resistance test | | ○ | ○ | ○ | ○ |

### (Example 28)

A first primer material solution comprising 60 parts by weight (60% by weight of the resin component) of an acrylic urethane resin (KA2 MEDIUM, manufactured by Showa Ink Manufacturing Co., Ltd., solid fraction concentration: 20% by weight), and 40 parts by weight (40% by weight of the resin component) of an acrylic resin acrylate oligomer (CSEB12 MEDIUM, manufactured by Showa Ink Manufacturing Co., Ltd.), was applied to a releasable film of stretched polyethylene terephthalate using a gravure coating method, and was then dried to form a first primer coating of thickness 2 µm.

Subsequently, a second primer material solution comprising 60 parts by weight (60% by weight of the resin component) of a urethane acrylate oligomer (CSEB5 MEDIUM, manufactured by Showa Ink Manufacturing Co., Ltd.), and 40 parts by weight (40% by weight of the resin component) of an acrylic urethane resin (KA2 MEDIUM, manufactured by Showa Ink Manufacturing Co., Ltd., solid fraction concentration: 20% by weight), diluted with a dilution solvent to generate a solid fraction concentration of 35% by weight, was applied to the surface of the first primer coating using a gravure coating method, and was then dried to form a second primer coating with a thickness of 3 µm.

Subsequently, a first radiation curable coating material comprising 100 parts by weight of a solventless radiation curable coating material (KRM7818, a urethane acrylate based material, manufactured by Daicel UCB Co., Ltd.), 1.0 parts by weight of a benzotriazole based ultraviolet absorber (TINUVIN 400, manufactured by Ciba Specialty Chemicals Inc.), 1.0 parts by weight of a hindered amine based photostabilizer (TINUVIN 290, manufactured by Ciba Specialty Chemicals Inc.), 3 parts by weight of a metallic pigment (IRIODIN #163, manufactured by Merck Co., Ltd.), and 5 parts by weight of a blue pigment (Cyanine blue 4980N, manufactured by Dainichiseika Color and Chemicals Manufacturing Co., Ltd.), as well as a second radiation curable coating material comprising 100 parts by weight of a solventless radiation curable coating material (KRM7842, a urethane acrylate based material, manufactured by Daicel UCB Co., Ltd.), 1.0 parts by weight of a benzotriazole based ultraviolet absorber (TINUVIN 400, manufactured by Ciba Specialty Chemicals Inc.), and 1.0 parts by weight of a hindered amine based photostabilizer (TINUVIN 290, manufactured by Ciba Specialty Chemicals Inc.) were prepared, and a two layer die coating method was used to apply a layer of the first radiation curable coating material of thickness 30 µm to the surface of the second primer coating, followed by a layer of the second radiation curable coating material of thickness 100 µm.

The layered construction was then cured by irradiation with an electron beam from the side of the applied radiation curable coatings, under conditions including a nitrogen gas atmosphere (with a residual oxygen concentration of 100 ppm), an absorbed dose of 7 Mrad, and a passage speed of 50 m/min., thus forming a first primer layer, a second primer layer, a first cured coating layer and a second cured coating layer (surface hardness: pencil hardness H). Subsequently, the polyethylene terephthalate film was removed from the first primer layer, a pressure sensitive adhesive layer (RIKIDYNE AR-2120, manufactured by VIGteQnos Co., Ltd.) of thickness 40 µm formed on a release sheet was bonded to the first primer layer, and the resulting construction was cured for 2 days at 40 to 50°C, thus yielding a decorative sheet for exterior facings.

The thus produced exterior decorative sheet was evaluated. The results are shown in Table 6.

### (Example 29)

A first primer material solution comprising 50 parts by weight (50% by weight of the resin component) of a vinyl chloride-vinyl acetate copolymer resin (MKK MEDIUM, manufactured by Showa Ink Manufacturing Co., Ltd.), 20 parts by weight (20% by weight of the resin component) of an acrylic based resin (MKA MEDIUM, manufactured by Showa Ink Manufacturing Co., Ltd.), and 30 parts by weight (30% by weight of the resin component) of an acrylic resin acrylate oligomer (CSEB12 MEDIUM, manufactured by Showa Ink Manufacturing Co., Ltd.), diluted with a dilution solvent to generate a solid fraction concentration of 30% by weight, was applied to a releasable film of stretched polyethylene terephthalate using a gravure coating method, and was then dried to form a first primer coating of thickness 2 µm.

Subsequently, a second primer material solution comprising 50 parts by weight (50% by weight of the resin component) of a urethane acrylate oligomer (CSEB5 MEDIUM, manufactured by Showa Ink Manufacturing Co., Ltd.), and 50 parts by weight (50% by weight of the resin component) of an acrylic resin acrylate oligomer (CSEB12 MEDIUM, manufactured by Showa Ink Manufacturing Co., Ltd.), diluted with a dilution solvent to generate a solid fraction concentration of 35% by weight, was applied to the surface of the first primer coating using a gravure coating method, and was then dried to form a second primer coating with a thickness of 3 µm.

Subsequently, a first radiation curable coating material comprising 100 parts by weight of a solventless radiation curable coating material (KRM7818, a urethane acrylate based material, manufactured by Daicel UCB Co., Ltd.), 1.0 parts by weight of a benzotriazole based ultraviolet absorber (TINUVIN 400, manufactured by Ciba Specialty Chemicals Inc.), 1.0 parts by weight of a hindered amine based photostabilizer (TINUVIN 290, manufactured by Ciba Specialty Chemicals Inc.), 3 parts by weight of a metallic pigment (IRIODIN #163, manufactured by Merck Co., Ltd.), and 5 parts by weight of a blue pigment (Cyanine blue 4980N, manufactured by Dainichiseika Color and Chemicals Manufacturing Co., Ltd.), as well as a second radiation curable coating material comprising 100 parts by weight of a solventless radiation curable coating material (KRM7946, a urethane acrylate based material, manufactured by Daicel UCB Co., Ltd.), 1.0 parts by weight of a benzotriazole based ultraviolet absorber (TINUVIN 400, manufactured by Ciba Specialty Chemicals Inc.), and 1.0 parts by weight of a hindered amine based photostabilizer (TINUVIN 290, manufactured by Ciba Specialty Chemicals Inc.) were prepared, and a two layer die coating method was used to apply a layer of the first radiation curable coating material of thickness 50 µm to the surface of the second primer coating, followed by a layer of the second radiation curable coating material of thickness 100 µm.

The layered construction was then cured by irradiation with an electron beam from the side of the applied radiation curable coatings, under conditions including a nitrogen gas atmosphere (with a residual oxygen concentration of 100 ppm), an absorbed dose of 7 Mrad, and a passage speed of 50 m/min., thus forming a first primer layer, a second primer layer, a first cured coating layer and a second cured coating layer (surface hardness: pencil hardness F). Subsequently, the polyethylene terephthalate film was removed from the first primer layer, a pressure sensitive adhesive layer (RIKIDYNE AR-2120, manufactured by VIGteQnos Co., Ltd.) of thickness 50 µm formed on a release sheet was bonded to the first primer layer, and the resulting construction was cured for 2 days at 40 to 50°C, thus yielding a decorative sheet for exterior facings.

The thus produced exterior decorative sheet was evaluated. The results are shown in Table 6.

### (Example 30)

A first primer material solution comprising 50 parts by weight (50% by weight of the resin component) of a vinyl chloride-vinyl acetate copolymer resin (MKK MEDIUM, manufactured by Showa Ink Manufacturing Co., Ltd.), and 50 parts by weight (50% by weight of the resin component) of an acrylic based resin (MKA MEDIUM, manufactured by Showa Ink Manufacturing Co., Ltd.), diluted with a dilution solvent to generate a solid fraction concentration of 30% by weight, was applied to a releasable film of stretched polyethylene terephthalate using a gravure coating method, and was then dried to form a first primer layer of thickness 2 µm.

Subsequently, a second primer material solution comprising 50 parts by weight (50% by weight of the resin component) of a urethane acrylate oligomer (CSEB5 MEDIUM, manufactured by Showa Ink Manufacturing Co., Ltd.), 30 parts by weight (30% by weight of the resin component) of a vinyl chloride-vinyl acetate copolymer resin (MKK MEDIUM, manufactured by Showa Ink Manufacturing Co., Ltd.), and 20 parts by weight (20% by weight of the resin component) of an acrylic based resin (MKA MEDIUM, manufactured by Showa Ink Manufacturing Co., Ltd.), diluted with a dilution solvent to generate a solid fraction concentration of 35% by weight, was applied to the surface of the first primer layer using a gravure coating method, and was then dried to form a second primer coating with a thickness of 3 µm.

Subsequently, a first radiation curable coating material comprising 100 parts by weight of a solventless radiation curable coating material (KRM7818, a urethane acrylate based material, manufactured by Daicel UCB Co., Ltd.), 1.0 parts by weight of a benzotriazole based ultraviolet absorber (TINUVIN 400, manufactured by Ciba Specialty Chemicals Inc.), 1.0 parts by weight of a hindered amine based photostabilizer (TINUVIN 290, manufactured by Ciba Specialty Chemicals Inc.), 3 parts by weight of a metallic pigment (IRIODIN #163, manufactured by Merck Co., Ltd.), and 5 parts by weight of a black pigment (#350, manufactured by Degussa AG), as well as a second radiation curable coating material comprising 100 parts by weight of a solventless radiation curable coating material (KRM7842, a urethane acrylate based material, manufactured by Daicel UCB Co., Ltd.), 1.0 parts by weight of a benzotriazole based ultraviolet absorber (TINUVIN 400, manufactured by Ciba Specialty Chemicals Inc.), and 1.0 parts by weight of a hindered amine based photostabilizer (TINUVIN 290, manufactured by Ciba Specialty Chemicals Inc.) were prepared, and a two layer die coating method was used to apply a layer of the first radiation curable coating material of thickness 60 µm to the surface of the second primer coating, followed by a layer of the second radiation curable coating material of thickness 90 µm.

The layered construction was then cured by irradiation with an electron beam from the side of the applied radiation curable coatings, under conditions including a nitrogen gas atmosphere (with a residual oxygen concentration of 100 ppm), an absorbed dose of 7 Mrad, and a passage speed of 50 m/min., thus forming a second primer layer, a first cured coating layer and a second cured coating layer (surface hardness: pencil hardness H). Subsequently, the polyethylene terephthalate film was removed from the first primer layer, a pressure sensitive adhesive layer (RIKIDYNE AR-2120, manufactured by VIGteQnos Co., Ltd.) of thickness 50 µm formed on a release sheet was bonded to the first primer layer, and the resulting construction was cured for 2 days at 40 to 50°C, thus yielding a decorative sheet for exterior facings.

The thus produced exterior decorative sheet was evaluated. The results are shown in Table 6.

In the examples 27 to 30, a pigment component was incorporated within the first radiation cured coating layer, and a second radiation cured coating layer was provided on top of the first, and consequently a colored decorative sheet with good luster and a high level of decorative design was obtained. Furthermore, because the first primer layer comprised a thermoplastic resin such as a vinyl chloride-vinyl acetate copolymer resin, and the second primer layer comprised a cured product of an acrylic based oligomer, the initial adhesion between the layers, including the pressure sensitive adhesive layer, and the peel strength between the various layers following heat resistance testing and weather resistance testing was excellent. Furthermore, each of the exterior decorative sheets displayed excellent weather resistance, and in heat resistance tests conducted for 48 hours at 80°C, the sheets satisfied the standard of a heat shrinkage factor of less than 0.2%, and are consequently very useful as any of the variety of exterior decorative sheets used in automobiles.

### INDUSTRIAL APPLICABILITY

As described above, when a decorative sheet of the present invention comprises, as the surface layer, a radiation cured coating layer containing a cured product of a solventless radiation curable resin formed from an acrylic based oligomer and a polymerizable monomer, the decorative sheet displays excellent weather resistance, abrasion resistance, solvent resistance and chemical resistance, and the shrinkage factor is small. Furthermore, because a decorative sheet of the present invention also comprises a decorative layer, the level of decorative design is also high. Furthermore, in a decorative sheet of the present invention, the decorative layer or first primer layer that contacts the pressure sensitive adhesive layer comprises at least 25% by weight of a thermoplastic resin containing at least one of a vinyl chloride-vinyl acetate copolymer resin, and acrylic based resin and a urethane based resin, and the decorative sheet also comprises a second primer layer that contacts the radiation cured coating layer, and consequently the adhesive transferability can be lowered considerably. As a result, the operation of removing transferred adhesive is simplified, thus improving the efficiency of the operation for removing and replacing a decorative sheet. Furthermore, when a decorative sheet of the present invention also comprises a pressure sensitive adhesive layer, the bonding operation can be completed with ease. Accordingly, a decorative sheet of the present invention is particularly useful as a decorative sheet for exterior facings.

In addition, when a decorative sheet of the present invention is bonded using an adhesive, the peel strength between layers is high, and the adhesion to the adhesive is also favorable, meaning a powerful adhesion can be achieved.

## Claims

1. A decorative sheet comprising a pressure sensitive adhesive layer, a radiation cured coating layer, and one or more primer layers disposed therebetween and contacting one of said two layers, wherein
in cases where one of said primer layers contacts said pressure sensitive adhesive layer, said primer layer comprises at least 25% by weight of at least one thermoplastic resin selected from a group consisting of vinyl chloride-vinyl acetate copolymer resins, acrylic based resins and urethane based resins, and
in cases where one of said primer layers contacts said radiation cured coating layer, said primer layer comprises at least 25% by weight of at least one thermoplastic resin selected from a group consisting of acrylic based resins and urethane based resins, and/or a cured product of a radiation curable resin formed from an acrylic based oligomer.

2. A decorative sheet according to claim 1, wherein a decorative layer with a printed pattern formed from a colored ink comprising a binder component containing at least 25% by weight of at least one thermoplastic resin selected from a group consisting of vinyl chloride-vinyl acetate copolymer resins, acrylic based resins and urethane based resins, and a coloring component, is disposed between said pressure sensitive adhesive layer and said radiation cured coating layer.

3. A decorative sheet according to claim 1, wherein
said one or more primer layers comprise a first primer layer and a second primer layer disposed in that order on said pressure sensitive adhesive layer,
said first primer layer comprises at least 25% by weight of at least one thermoplastic resin selected from a group consisting of vinyl chloride-vinyl acetate copolymer resins, acrylic based resins and urethane based resins, and
said second primer layer comprises at least 25% by weight of at least one thermoplastic resin selected from a group consisting of acrylic based resins and urethane based resins, and/or a cured product of a radiation curable resin formed from an acrylic based oligomer.

4. A decorative sheet according to claim 3, wherein a decorative layer with a printed pattern formed from a colored ink comprising a binder component containing at least 25% by weight of at least one thermoplastic resin selected from a group consisting of vinyl chloride-vinyl acetate copolymer resins, acrylic based resins and urethane based resins, and a coloring component, is disposed between said first primer layer and said second primer layer.

5. A decorative sheet according to claim 3, wherein a decorative layer with a printed pattern formed from a colored ink comprising a binder component containing at least 25% by weight of at least one thermoplastic resin selected from a group consisting of vinyl chloride-vinyl acetate copolymer resins, acrylic based resins and urethane based resins, and a coloring component, is disposed between said pressure sensitive adhesive layer and said first primer layer.

6. A decorative sheet comprising a decorative layer, a radiation cured coating layer, and one or more primer layers disposed therebetween and contacting one of said two layers, wherein
said decorative layer incorporates a printed pattern formed from a colored ink comprising a binder component containing at least 25% by weight of at least one thermoplastic resin selected from a group consisting of vinyl chloride-vinyl acetate copolymer resins, acrylic based resins and urethane based resins, and a coloring component, and
in cases where one of said primer layers contacts said decorative layer, said primer layer comprises at least 25% by weight of at least one thermoplastic resin selected from a group consisting of vinyl chloride-vinyl acetate copolymer resins, acrylic based resins and urethane based resins, and
in cases where one of said primer layers contacts said radiation cured coating layer, said primer layer comprises at least 25% by weight of at least one thermoplastic resin selected from a group consisting of acrylic based resins and urethane based resins, and/or a cured product of a radiation curable resin formed from an acrylic based oligomer.

7. A production process for a decorative sheet comprising:
a primer layer formation step for forming one or more primer layers on a releasable film,
a step for forming a radiation curable coating layer on top of said one or more primer layers,
a curing step for irradiating at least said radiation curable coating layer with ultraviolet radiation or an electron beam, thus curing said radiation curable coating layer, and
a pressure sensitive adhesive layer formation step for removing said releasable film from said one or more primer layers, and forming a pressure sensitive adhesive on top of said primer layer.

8. A production process for a decorative sheet according to claim 7, wherein said one or more primer layers comprise one layer containing at least 25% by weight of at least one thermoplastic resin selected from a group consisting of acrylic based resins and urethane based resins, and/or a cured product of a radiation curable resin formed from an acrylic based oligomer.

9. A production process for a decorative sheet according to claim 7, wherein said one or more primer layers contact either one of said pressure sensitive adhesive layer and said radiation curable coating layer, and
in cases where one of said primer layers contacts said pressure sensitive adhesive layer, said primer layer comprises at least 25% by weight of at least one thermoplastic resin selected from a group consisting of vinyl chloride-vinyl acetate copolymer resins, acrylic based resins and urethane based resins, and
in cases where one of said primer layers contacts said radiation curable coating layer, said primer layer comprises at least 25% by weight of at least one thermoplastic resin selected from a group consisting of acrylic based resins and urethane based resins, and/or a cured product of a radiation curable resin formed from an acrylic based oligomer.

10. A production process for a decorative sheet according to any one of claim 7 through claim 9, further comprising, prior to said primer layer formation step, a decorative layer formation step for forming a decorative layer of a printed pattern on top of said releasable film, using a colored ink comprising a binder component containing at least 25% by weight of at least one thermoplastic resin selected from a group consisting of vinyl chloride-vinyl acetate copolymer resins, acrylic based resins and urethane based resins, and a coloring component, wherein said primer layer is then formed on top of said decorative layer.

11. A production process for a decorative sheet according to any one of claim 7 through claim 9, wherein said primer layer formation step comprises:
a first primer layer formation step for forming a first primer layer by applying a first primer material comprising at least 25% by weight of at least one thermoplastic resin selected from a group consisting of vinyl chloride-vinyl acetate copolymer resins, acrylic based resins and urethane based resins to said releasable film, and subsequently drying said first primer material, and
a second primer layer formation step for forming a second primer layer by applying a second primer material comprising at least 25% by weight of at least one thermoplastic resin selected from a group consisting of acrylic based resins and urethane based resins, and/or a cured product of a radiation curable resin formed from an acrylic based oligomer to the first primer layer, and subsequently drying said second primer material.

12. A production process for a decorative sheet according to claim 11, further comprising, between said first primer layer formation step and said second primer layer formation step, a decorative layer formation step for forming a decorative layer of a printed pattern on top of said first primer layer, using a colored ink comprising a binder component containing at least 25% by weight of at least one thermoplastic resin selected from a group consisting of vinyl chloride-vinyl acetate copolymer resins, acrylic based resins and urethane based resins, and a coloring component.

13. A production process for a decorative sheet according to claim 11, further comprising, prior to said first primer layer formation step, a decorative layer formation step for forming a decorative layer of a printed pattern on top of said releasable film, using a colored ink comprising a binder component containing at least 25% by weight of at least one thermoplastic resin selected from a group consisting of vinyl chloride-vinyl acetate copolymer resins, acrylic based resins and urethane based resins, and a coloring component.
